# EUROPÄISCHE PATENTSCHRIFT

(11) **EP 1 665 779 B1**
(45) Veröffentlichungstag und Bekanntmachung des Hinweises auf die Patenterteilung: **29.07.2009**
(21) Anmeldenummer: 05706929.6
(22) Anmeldetag: 19.01.2005
(51) Int. Cl.: H04N 5/335

(54) **BILDERFASSUNGSSYSTEM UND DESSEN VERWENDUNG**
IMAGE RECORDING SYSTEM, AND USE THEREOF
SYSTEME DE CAPTURE D'IMAGES ET SON UTILISATION

(30) Priorität: 20.01.2004 DE 102004003013
(43) Veröffentlichungstag der Anmeldung: 07.06.2006
(73) Patentinhaber: Fraunhofer-Gesellschaft zur Förderung der angewandten Forschung e.V., 80686 München (DE)
(72) Erfinder: DUPARRE, Jacques, 07745 Jena (DE); DANNBERG, Peter, 07745 Jena (DE); SCHREIBER, Peter, 07749 Jena (DE); VÖLKEL, Reinhard, CH-2000 Neuchâtel (CH); BRÄUER, Andreas, 07646 Schlöben (DE)
(74) Vertreter: Pfenning, Meinig & Partner GbR
(86) Internationale Anmeldenummer: PCT/EP2005/000495
(87) Internationale Veröffentlichungsnummer: WO 2005/069607

(56) Entgegenhaltungen:
- EP-A- 0 813 079
- EP-A- 0 825 764
- WO-A-97/21301
- WO-A-99/26419
- DE-A1- 10 051 763
- DE-A1- 19 917 890
- GB-A- 1 507 809
- VOLKEL R ET AL: "Miniaturized imaging systems" MICROELECTRONIC ENGINEERING, ELSEVIER PUBLISHERS BV., AMSTERDAM, NL, Bd. 1667-68, Juni 2003 (2003-06), Seiten 461-472, XP004428906 ISSN: 0167-9317
- DUPARRÉ J.; SCHREIBER P.; VÖLKEL R.: 'Theoretical analysis of an artificial superposition compound eye for application in ultra flat digital image acquisition devices' PROCEEDINGS OF THE SPIE CONFERENCE OPTICAL DESIGN AND ENGINEERING , ST ETIENNE, FRANCE 30.9.03-3.10.03 Bd. 5249, 18 Februar 2004, SPIE,USA, Seiten 408 - 418

## Beschreibung

Die Erfindung betrifft ein digitales Bilderfassungssystem mit minimaler Baulänge von weniger als 1 mm. Das Bilderfassungssystem besteht hierbei aus einem Mikrolinsenarray, einem Detektorarray und optional einem Pinhole-Array. Die Funktionsweise dieses Bilderfassungssystems beruht auf einer getrennten Abbildung verschiedener Raumwinkelsegmente des Objektraumes durch eine Vielzahl von parallelen optischen Kanälen.

Bei klassischen abbildenden optischen Systemen bildet ein einzelner optischer Kanal (Objektiv) alle Informationen aus dem Objektraum in die Bildebene ab. Das Objektiv bildet den ganzen erfassbaren Winkelbereich des Objektraumes ab.

In S. Ogata, J. Ishida, und T. Sasano, "Optical sensor array in an artificial compound eye", Opt. Eng. 33, pp. 3649-3655, November 1994, wird ein optisches Sensor-Array präsentiert. Die optischen Zusammenhänge für ein allgemeines solches System werden detailliert dargestellt. Es erfolgt eine Anbindung der Mikrooptik an photo-elektrische Bildwandlung. Aufgrund der Nutzung von Gardientenindexlinsen, die zu einem Array zusammengesetzt sind, ist die Zahl der optischen Kanäle auf 16x16 beschränkt, die Baulänge ist mit 2,9 mm weit über der hier angestrebten. Aufgrund der verwendeten Aufbautechnik kann nicht von einem monolithischen, systemintegrierten Aufbau gesprochen werden. Das gezeigte System scheint nicht bzgl. der Länge und Zahl der Kanäle skalierbar zu sein. Das Gesichtsfeld der Anordnung ist durch die maximal mögliche Pitch-differenz zwischen Linsen- und Pinhole-Array limitiert. Eine Anordnung mehrerer genannter Module auf einer gekrümmten Basisoberfläche zur Skalierung des Gesichtsfeldes und der Kanalzahl wird vorgeschlagen. Dies widerspricht jedoch völlig einer angestrebten Systemintegration.

Die Druckschrift K. Hamanaka und H. Koshi, "An artificial compound eye u sing a microlens array and its application to scale-invariant processing", Optical Review 3 (4), pp. 264-268, 1996, betrachtet die Anordnung einer Selfoc-Linseplatte vor einem Pinhole-Array gleichen Pitches. Möglichkeiten der Bildverarbeitung und die relativ starke Objektabstandsinvarianz der Anordnung werden demonstriert. Die Rückseite des Pinhole-Arrays wird mittels einer Relayoptik auf eine CCD abgebildet. Es ist damit kein direkter Anschluss der abbildenden Optik an die bildwandelnde Elektronik wie in [1] gegeben. Die Baulänge ist größer 16 mm, 50x50 Kanäle wurden realisiert. Aufgrund des gleichen Pitches von Linsenarray und Pinhole-Array ist für größere Objektabstände mit dieser Anordnung keine Auflösung des Objektes mehr möglich. Eine zusätzlich vor dem Linsenarray angebrachte Zerstreuungslinse erzeugt eine Vergrößerung des winkelmäßigen Gesichtsfeldes, was eine verkleinernde Abbildung bedeutet und damit eine Vergrößerung des Objektabstandes bei gleichbleibender Funktion des Systems ermöglicht. Dies widerspricht jedoch dem Ziel der Integration. Die verwendeten Pinholedurchmesser betragen 140 µm, was keine gute Auflösung des Systems erlaubt.

In J. Tanida, T. Kumagai, K. Yamada, und S. Miyatake, "Thin observation module by bound optics (tombo) concept and experimental verification", Appl. Opt. 40, pp. 1806-1813, April 2001, wird das hinter jeder Mikrolinse entstehende Mikrobild durch eine Anordnung einer Sub-Gruppe von Pixeln in einer Zelle aufgenommen. Aus den unterschiedlichen Abständen der verschiedenen Kanäle von der optischen Achse des Arrays resultiert ein leichter Versatz der verschiedenen Mikrobilder innerhalb einer Zelle. Diese Bilder werden durch einen komplizierten Rechenformalismus zu einem höher aufgelösten Gesamtbild verrechnet. Als abbildendes Mikrolinsenarray dient ein Selfoclinsenarray der Dicke 650 µm mit Linsendurchmessern von 250 µm. Die Bilderfassung erfolgt zentral hinter den Mikrolinsen. Es werden Trennwände aus Metall und gekreuzten Polarisationsfilter zur optischen Isolierung zur Minimierung des Übersprechens eingesetzt. Damit werden auch hier einzeln hergestellte Komponenten aufwändig zueinander justiert, was zur Entstehung von zusätzlichen Fehlerquellen und Kosten führt. Zur möglichen Erweiterung des limitierten Gesichtsfeldes (Einführung eines (negativen) Vergrößerungsfaktors) des Systems, z.B. für große Objektabstände, wird ein Prismenarray mit variablen Ablenkwinkeln, eine Zerstreuungslinse oder die Integration einer Strahlablenkung in diffraktive Linsen vorgeschlagen. Dadurch würde die Systemdicke nicht erhöht. Eine konkrete Auflösung des Systems wurde nicht angegeben.

Die Druckschrift S. Wallstab und R. Völkel, "Flachbauendes Bilderassungssystem", Offenlegungsschrift DE 199 17 890 A1, November 2000, beschreibt verschiedene Anordnungen für flachbauende Bilderfassungssysteme. Für die der vorliegenden Erfindung nahekommende Ausführungsvariante ist jedoch keine sinnvolle Möglichkeit der Bilderfassung für große Objektabstände angegeben (Gesichtsfelderweiterung, bzw. verkleinernde Abbildung). Insbesondere von einer Pitchdifferenz zwischen Mikrolinsenarray und Pinhole-Array ist keine Rede.

In M. Meyers, "Compact digital camera with segmented fields of view", US-Patent 6,137,535, Oct. 24, 2000, wird eine flache abbildende Optik mit segmentiertem Gesichtsfeld vorgestellt. Hier wird ein Mikrolinsenarray mit dezentrierten Mikrolinsen eingesetzt, wobei die Dezentrierung von der radialen Koordinate der betrachteten Mikrolinse im Array abhängt. Auf diese Weise zeigen die Achsenstrahlen jeder Linse in ein anderes Segment des gesamten Gesichtsfeldes, jede Mikrolinse bildet einen anderen Teil des Gesichtsfeldes in ihrer Bildebene ab. Ein Photodetektorarray mit jeweils einer Sub-Gruppe von Pixeln hinter jeder Mikrolinse nimmt das Bild hinter jeder Mikrolinse auf. Die den einzelnen Gesichtsfeldsegmenten entsprechenden Bilder werden elektronisch gespiegelt und aneinandergesetzt. Eine detaillierte Beschreibung der notwendigen Elektronik wird angegeben. Baffle-Strukturen vor und hinter den Linsen verhindern das Übersprechen zwischen benachbarten Kanälen bzw. schränken das Gesichtsfeld der einzelnen Kanäle und damit die Bildgröße ein. Die Herstellung der dezentrierten Linsen bzw. deren Urformen wird nicht angegeben. Die verschiedenen Komponenten sind auch hier getrennt voneinander herzustellen und nicht z.B. im Wafermaßstab u. U. direkt in Verbindung mit der Herstellung der Elektronik als monolithische Struktur. So wird z.B. ein Luftspalt zwischen dem Mikrolinsenarray und dem Detektorarray angegeben. Ein extremer Justageaufwand führt deshalb zu hohen Kosten bei der Herstellung. Eine deutliche Reduktion der Baulänge kann dieser Erfindung nicht zugemessen werden, da die Auswertung der einzelnen Bilder der Gesichtsfeldsegmente eine gewisse Vergrößerung der Mikrolinsen und damit eine gewisse Brennweite, bzw. Schnittweite der Linsen und daraus folgend Länge des Systems benötigt. Die Nutzung dezentrierter Mikrolinsen ist somit als Ersatz für eine große abbildende Linse zu sehen, aber ohne einen Effekt auf die Baulänge der Optik, solange nicht eine deutliche Verkleinerung der individuellen Bilder und damit Verlust an effektiver Vergrößerung bzw. Auflösungsverlust hingenommen wird. Eine mögliche Pitchdifferenz zwischen Mikrolinsenarray und Detektor-sub-gruppen zur Erzeugung einer effektiven Vergrößerung wird nicht angegeben. Die effektive (negative) Vergrößerung des Gesamtsystems wird dadurch durch die zitierte Erfindung nicht erhöht. Angegebene mögliche Systemlängen sind deshalb stets wesentlich größer als 1 mm. Es wird nicht auf die Möglichkeit hingewiesen, einer Mikrolinse jeweils nur einen Detektorpixel zuzuordnen. Dies würde durch die freie Einstellbarkeit der Dezentrierung unabhängig von der Vergrößerung der Mikrolinse insgesamt eine deutliche Erhöhung der (negativen) Vergrößerung des Gesamtsystems bzw. Verkürzung bei konstanter Vergrößerung zur Folge haben sowie eine deutliche Erhöhung der Freiheitsgrade zur Bildverarbeitung.

Die Druckschrift P.-F. Rüedi, P. Heim, F. Kaess, E. Grenet, F. Heitger, P.-Y. Burgi, S. Gyger und P. Nussbaum, "A 128 x 128 pixel 120 dB dynamic range vision sensor chip for image contrast and orientation extraction", in IEEE International Solid-State Circuits Conference, Digest of Technical Papers, p. Paper 12.8, IEEE, February 2003, beschreibt einen elektronischen Sensor zur Kontrastermittlung. Dies wird als eine sehr elegante Weise zur Bildinformationsgewinnung gesehen. Nicht nur Auflösungsvermögen, sondern Beleuchtungsstärkeunabhängigkeit und Gewinnung zusätzlicher Information zu Helligkeit der Objektquellen werden hier als Möglichkeit zur Aufnahme von Bildern mit hohem Informationsgehalt gesehen. Aufgrund ihrer Architektur sind solche Sensoren allerdings mit einem geringen Füllfaktor versehen. Space filling arrays (bzw. "focal plane arrays") werden genutzt, um den Füllfaktor zu erhöhen. Klassische Objektive werden zur Abbildung des Objektes genutzt, was die Systemlänge wesentlich erhöht und den Einsatz dieser vielversprechenden Sensoren im Alltag (z.B. im automotive Bereich) limitiert. Eine Verknüpfung der vorliegenden Erfindung mit den genannten Sensoren als Austausch für das focal plane Array und die makroskopische abbildende Optik bedeutete eine extreme Mehrwerterzeugung aufgrund einer deutlichen Systemverkürzung und -integration.

Aus der JP 2001-210812 A ist ein optisches System mit einer Vielzahl optischer Kanäle mit jeweiliger Mikrolinse sowie in dessen Brennebene angeordnetem Detektor dargestellt. Dieses optische System ist hinter einer die tatsächliche Abbildung realisierenden herkömmlichen Optik angeordnet. Gleichzeitig weisen die Detektorpixel etwa die gleiche Größe wie die Mikrolinsen auf, wodurch ein sehr großer Winkelbereich des Objekts auf einem einzigen Pixel abgebildet werden kann. Hieraus resultiert ein abbildendes System mit nur geringer Auflösung.

Das Dokument EP 0 813 079 offenbart ein Bilderfassungssystem gemäss dem Oberbegriff des Anspruchs 1.

Ein prinzipielles Problem bei der Realisierung der aus dem Stand der Technik bekannten abbildenden Systeme ist die Planarität der möglichen technischen Anordnungen. Off-axis-Aberrationen, die durch die Anordnung auf gekrümmten Oberflächen vermieden werden könnten, limitieren durch die Herstellung in Planartechnik, d.h. Lithographie, die Bildqualität oder schränken das Gesichtsfeld ein. Diese Einschränkungen sollen durch Teile der vorliegenden Erfindung aufgehoben werden.

Ausgehend von diesen Nachteilen des Standes der Technik ist es Aufgabe der vorliegenden Erfindung, ein Bilderfassungssystem bereitzustellen, das verbesserte Eigenschaften bezüglich mechanischer und optischer Parameter, wie Systemlänge, Gesichtsfeld, Auflösungsvermögen, Bildgröße und Lichtstärke besitzt.

Diese Aufgabe wird durch das Bilderfassungssystem mit den Merkmalen des Anspruchs 1 gelöst. Die weiteren abhängigen Ansprüche zeigen vorteilhafte Weiterbildungen auf. Die Verwendungen derartiger Bilderfassungssysteme werden in den Ansprüchen 30 bis 36 beschrieben.

Erfindungsgemäß wird ein Bilderfassungssystem aus regelmäßig angeordneten optischen Kanälen mit einer Mikrolinse und mindestens einem in dessen Brennlinie liegenden Detektor, der aus dem Mikrobild hinter der Mikrolinse mindestens einen Bildpunkt extrahiert, bereitgestellt. Hierbei weisen die optischen Achsen der einzelnen optischen Kanäle unterschiedliche Neigungen auf, so dass sie eine Funktion des Abstandes des optischen Kanals vom Mittelpunkt der zum Bild gewandten Seite des Bilderfassungssystems darstellen und damit das Verhältnis der Größe des Gesichtsfeldes der Optik zur Bildfeldgröße gezielt bestimmbar ist. Dabei werden Detektoren mit derart hoher Empfindlichkeit eingesetzt, dass diese einen großen Pitch bei kleiner aktiver Fläche aufweisen.

Die beschriebene flache Kamera besteht aus einem Mikrolinsenarray und einem, in dessen Brennebene liegenden Detektorarray bzw. einem optionalen Pinhole-Array, welches ein Detektorarray größerer aktiver Flächen als die der Pixel abdeckt. Unter Pixel ist im Rahmen dieser Anmeldung ein Bereich mit gewünschter spektraler Empfindlichkeit zu verstehen. In der Bildebene jeder Mikrolinse entsteht ein Mikrobild des Objektes, welches durch das Detektor- oder Pinhole-Array statisch abgetastet wird. Jeder Mikrolinse ist ein oder sind wenige photosensitiver Pixel, z.B. mit unterschiedlichen Funktionen, wie z.B. spektralen Empfindlichkeiten, zugeordnet. Durch den auf verschiedene Weisen erzeugten Versatz des photosensitiven Pixels innerhalb des Mikrobildes von Zelle zu Zelle wird über das gesamte Array das komplette Bild abgetastet und aufgenommen. Die Neigung der optischen Achse eines optischen Kanals bestehend aus einer Mikrolinse und einem aus dem Mikrobild hinter dieser Linse einen Bildpunkt extrahierendem Detektor bzw. diesen abdeckenden Pinholes ist eine Funktion seiner radialen Koordinate im Array.

Das erfindungsgemäße Abbildungsprinzip lässt sich unabhängig vom spektralen Bereich einsetzen und ist deshalb allgemein von UV über VIS bis hin in das tiefe IR nutzbar, bei entsprechender Anpassung der zu nutzenden Materialien für Optik und Empfänger an den spektralen Bereich. Auch der Einsatz für IR Sensoren scheint besonders attraktiv da hier die Mikrolinsenarrays z.B. in Silizium oder Germanium (oder begrenzt auch entsprechende Polymere) gefertigt werden können, was den Vorteil besitzt, dass keine großen und damit extrem teuren Germanium- oder Siliziumlinsen nötig sind, sondern nur sehr dünne Mikrolinsenarrays, was zu deutlicher Material- und Masseersparnis und damit einer Kostenersparnis führt. IR-Sensoren haben oft einen großen Pitch bei kleiner aktiver Pixelfläche und bedürfen deswegen füllfaktorerhöhender Linsenarrays. Die Kombination konventioneller abbildender Optik mit füllfaktorerhöhendem Linsenarray kann durch die Erfindung durch nur ein abbildendes Linsenarray ersetzt werden. So können z.B. auch Temperaturfelder bestimmende Bolometerarrays mit ultraflachen abbildenden Systemen versehen werden.

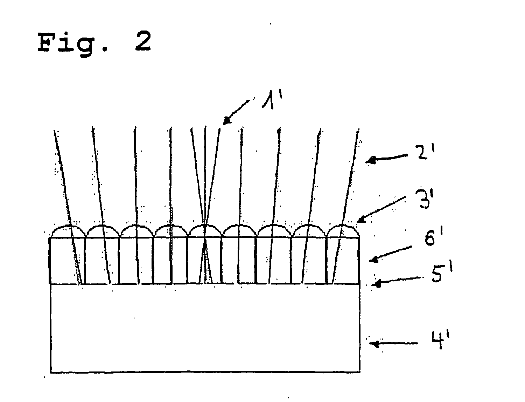

Vorzugsweise sind die benachbarten Zellen optisch isoliert (vgl. Fig. 2). Dies verhindert ein Übersprechen, das zu einem verringertem Signal-RauschVerhältnis des abbildenden System führt. Durch die auf verschiedene Weisen zu gewährleistenden geneigten optischen Achsen beobachten sie getrennt von bzw. nur mit minimalem winkelmäßigen Überlapp zu den benachbarten abbildenden Einheiten den Objektraum. Jeder optische Kanal liefert deshalb mindestens einen Bildpixel (u. U. in verschiedenen Farben), der einem Raumwinkelbereich im Objektraum innerhalb des Gesichtsfeldes der gesamten Optik entspricht. Die Zusammenführung aller von den einzelnen optischen Kanälen gelieferten Signale erlaubt die Rekonstruktion der Objektverteilung. Die genannte Anordnung ist vorteilhaft kombinierbar besonders mit photo-elektronischen Sensoren, die eine große Empfindlichkeit bzw. Kontrastsensitivität aufweisen, aber einen relativ großen Pitch bei kleinen Pixeln besitzen (geringer Füllfaktor). Die beschriebene Anordnung wird mit modernen mikrooptischen Technologien im System- und Wafermaßstab erzeugt. Aufwändige Zusammenbau- und Justierschritte einzeln gefertigter Komponenten entfallen dadurch. Eine größtmögliche Systemintegration, Präzision und Preisattraktivität ist die Folge. Die Zahl der optischen Kanäle kann der Anwendung entsprechend angepasst werden und im Bereich von sinnvoll 10x10 bis 1000x1000 Kanälen (für hochaufgelöste Bilder) variieren.

Je nach Größe der Mikrolinsen und Bildweite (Dicke der Kamera) kann die laterale Ausdehnung des Kamerachips unter 1x1 mm² aber auch mehr als 10x10 mm² betragen. Auch nicht quadratische Anordnungen sind denkbar, um an Detektorgeometrie oder an die Form des Gesichtsfeldes anzupassen. Nicht runde Linsen (Anamorphoten) zur Korrektur der außeraxialen Aberrationen sind vorstellbar.

Eine Kombination der bildaufnehmenden Kanäle mit dazwischen- oder daraufliegenden Lichtquellen (z.B. OLEDs) ist sehr vorteilhaft für eine weitere Reduktion der Baulänge bzw. des nötigen Volumens einer abbildenden Anordnung, da nicht wie sonst, noch aufwendig eine Beleuchtung von der Seite oder in Auf- oder Durchlicht zugeführt werden muss. Damit erschließen sich auch die kleinsten und engsten Arbeitsräume, z.B. auch in der Mikrosystemtechnologie oder der Endoskopie in der Medizin.

Eine erfindungsgemäße Variante sieht vor, dass eine Korrektur von außeraxialen Bildfehlern durch Nutzung von unterschiedlichen anamorphotischen Linsen, insbesondere elliptische Schmelzlinsen, für jeden einzelnen Kanal ermöglicht wird. Die Korrektur des Astigmatismus und der Bildfeldwölbung ermöglicht, dass das Bild über das gesamte Gesichtsfeld bzw. Bildfeld gleich scharf bleibt, da die Form der Linse jedes Kanals individuell an den zu übertragenden Einfallswinkel angepasst wird. Die Linse besitzt zwei unterschiedliche Hauptkrümmungsradien. Die Orientierung der Ellipsen ist stets so, dass die Achse eines Hauptkrümmungsradius in Richtung des sich vergrößernden Einfallswinkels und die des anderen Hauptkrümmungsradius senkrecht dazu steht. Beide Hauptkrümmungsradien wachsen mit steigendem Einfallswinkel nach analytisch ableitbaren Gesetzmäßigkeiten, wobei die Radien unterschiedlich stark zunehmen. Eine Einstellung des Hauptkrümmungsradienverhältnisses der Linse eines einzelnen Kanals kann durch das Einstellen des Achsenverhältnisses der Ellipsenbasis erfolgen. Die Einstellung der Änderung des Krümmungsradius von Kanal zu Kanal erfolgt durch die Einstellung der Größe der Achsen.

Weiterhin kann in einer erfindungsgemäßen Variante eine Korrektur der Verzeichnung, d.h. des Hauptstrahlfehlwinkels, durch eine angepasste Position des Pinholes bzw. Detektors im Bild einer Mikrolinse erreicht werden. Eine Korrektur der Verzeichnung ist einfach durch eine nicht konstante Pitch-Differenz zwischen Linsenarray und Pinhole bzw. Detektorarray möglich. Durch eine Anpassung der Position des Pinholes bzw. Detektors im Bild einer Mikrolinse je nach deren Position innerhalb der gesamten Kamera und demzufolge der zu verarbeitenden Blickrichtung kann das resultierende Gesamtbild komplett verzeichnungsfrei erzeugt werden. Um an ein Sensorarray mit konstanten Pitch angebracht zu werden, muss demzufolge die Position der jeweiligen Mikrolinse nicht nur um ein Vielfaches der Pitch-Differenz gegenüber dem Detektor versetzt sein, sondern dem realen zu verarbeitenden Hauptstrahlwinkel angepasst sein.

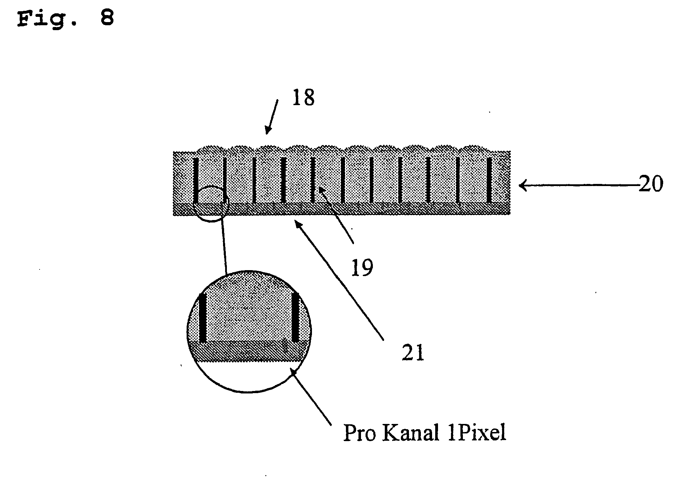

Hinsichtlich der Zahl der Pixel pro Kanal besteht erfindungsgemäß sowohl die Möglichkeit, dass jedem Kanal ein Pixel zugeordnet ist, oder dass jedem Kanal mehrere Pixel zugeordnet sind. Eine einfache Anordnung, wie sie in Figur 8 dargestellt ist, bedarf dabei nur eines einzigen elektronischen Pixels pro Kanal zur Bilderzeugung. Zur Anpassung an das Abbildungskonzept basierend auf künstlichen Facettenaugen sollte eine Pixelgröße der Optoelektronik entsprechend der beugungsbegrenzten Spotgröße von ungefähr 2 bis 3 µm gewählt werden, wobei der Pixel-Pitch in der Größenordnung von 50 bis 100 µm liegen sollte. Eine Nutzung des freien Platzes auf dem Sensor kann durch die Implementierung von intelligenter pixelnaher Signalvorverarbeitung geschehen. Viele Bildverarbeitungsaufgaben können bereits analog in dem Bildsensor, z.B. durch Operation zwischen Pixeln benachbarter oder nur wenig entfernter Kanäle bewältigt werden. Hierzu zählen beispielsweise:
- Kontrast, Kontrastrichtung (Kantenorientierung)
- Bewegungsdetektion
- Auflösungserhöhung für Punktquellen (für Punktquellen kann eine Auflösung der Position im Gesichtsfeld weit genauer als das Beugungslimit der Optik erreicht werden, indem die Differenzen der Signale benachbarter Kanäle für den gleichen Objektpunkt ausgewertet werden.)
- Bestimmung des Schwerpunktes und der mittleren Ausdehnung einer Intensitätsverteilung.

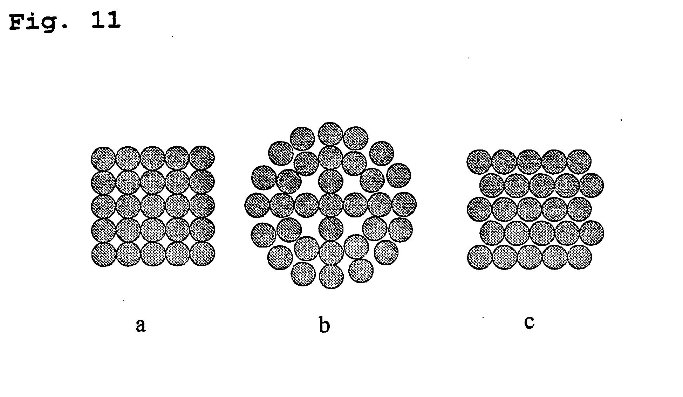

Durch den Einsatz mehrerer Pixel mit verschiedenen Eigenschaften oder von Pixelgruppen mit Pixeln gleicher Eigenschaften in den einzelnen Kanälen kann eine Vielzahl zusätzlicher Bildinformationen bereitgestellt werden. Hierzu zählen:
- Es kann eine Auflösungssteigerung über das Beugungslimit hinaus erreicht werden, sog. Sub-PSF-Auflösung (PSF = Punktbildverwaschungsfunktion). Hierzu müssen für jeden Kanal Gruppen von dichtgepackten gleichartigen Pixeln, d.h. 4 bis 25 Stück, mit einer Größe von ≤ 1 µm für die einzelnen Pixel realisiert werden. Das Zentrum der Pixelgruppe befindet sich an der gleichen Stelle wie die einzelnen Pixel gemäß der erfindungsgemäßen Variante, bei der nur ein Pixel pro Kanal eingesetzt wird. Das Zentrum der Pixelgruppe ist von der radialen Koordinate des betrachtenden Kanals im Array abhängig.
- Weiterhin besteht die Möglichkeit, einen elektronischen Zoom, eine elektronische Blickrichtungsänderung oder eine elektronische Lichtstärkeeinstellung zu realisieren. Die Nutzung eines konventionellen dichtgepackten Bildsensors mit kleinen Pixeln, z.B. ein Megapixel-Bildsensor, kann zur Aufnahme der kompletten hinter allen Mikrolinsen des Arrays entstehenden Bilder genutzt werden. Durch Auswahl nur bestimmter Pixel aus den einzelnen Kanälen zur Erzeugung des gewünschten Bildes können die Vergrößerung bzw. das Gesichtsfeld eingestellt werden, da die Pixelposition im Kanal die Funktion der radialen Koordinate des betrachteten Kanals im Array ist. Ebenso kann die Blickrichtung durch einfache Translation aller ausgelesenen Pixel eingestellt werden. Weiterhin lässt sich die Lichtstärke durch Superpositionen der Signale benachbarter Pixel einstellen, wobei sich die effektive Pixelgröße erhöht, was zu einem Auflösungsverlust führt.
- Durch Verrechnung aller Mikrobilder kann eine Auflösungserhöhung erreicht werden. Hierzu wird ein konventioneller dichtgepackter Bildsensor (Megapixel-Bildsensor) zur Aufnahme der kompletten hinter allen Mikrolinsen des Arrays entstehenden Bilder genutzt. Die einzelnen Mikrobilder haben einen minimalen lateralen Versatz gegeneinander durch die unterschiedliche Position der einzelnen Kanäle relativ zum Mittelpunkt des Arrays. Die Verrechnung dieser minimalen Verschiebung der Mikrobilder zu einem Gesamtbild resultiert in einem deutlich höher aufgelösten Bild als bei Aufnahme nur eines Bildpixels pro Kanal. Dies macht allerdings lediglich für mit der lateralen Kameraausdehnung vergleichbar geringe Objektabstände Sinn.
- Ebenso werden Farbaufnahmen durch Anordnung von Farbfiltern vor mehreren sonst gleichartigen Pixeln pro Kanal ermöglicht. Das Zentrum der Pixelgruppe befindet sich dabei an der gleichen Stelle wie ein Einzelpixel bei der einfachen Variante mit nur einem Pixel pro Kanal, wobei das Zentrum der Pixelgruppe von der radialen Koordinate des betrachteten Kanals im Array abhängig ist. Eine elektronische Winkelkorrektur kann nötig sein. Um dies zu vermeiden, ist auch eine Kombination mit Farbbildsensoren möglich, deren drei farbempfindliche Detektorebenen übereinander und nicht nebeneinander angeordnet sind.
- Weiterhin kann eine Erhöhung der Lichtstärke ohne Auflösungsverlust dadurch erreicht werden, dass mehrere gleichartige Pixel mit höherem Abstand in einem Kanal angeordnet werden. Mehrere Kanäle blicken dadurch von unterschiedlichen Stellen der Kamera in die gleiche Richtung. Eine nachträgliche Superposition zueinandergehöriger Signale erhöht die Lichtstärke ohne gleichzeitig die Winkelauflösung zu verringern. Dabei variiert die Position der Pixelgruppe relativ zur Mikrolinse minimal von Kanal zu Kanal, sodass eine Abtastung des Gesichtsfeldes analog zur Variante mit nur einem Pixel pro Kanal geschieht.
   Der Vorteil dieser Variante ist, dass aufgrund der Tatsache, dass mehrere Kanäle gleichzeitig den gleichen Bildpunkt erzeugen, das Rauschen sich nur statistisch akkumuliert, d.h. es korreliert mit der Wurzel der Photonennzahl, aber das Signal sich linear akkumuliert. Es resultiert somit eine Verbesserung des Signal-Rausch-verhältnisses.
- Eine weitere erfindungsgemäße Variante sieht vor, dass eine Anordnung gewählt wird, bei der sich durch die Anordnung mehrerer Pixel pro Kanal die optischen Achsen wenigstens zweier Kanäle in einem Objektpunkt schneiden. Dafür darf weiterhin die Gegenstandsweite nicht zu groß gegenüber der lateralen Kameraausdehnung sein, d.h. entscheidend für eine gute Tiefenauflösung bei der Abstandsmessung ist eine möglichst große Basislänge der Triangulation. Kanäle, die aus verschiedenen Richtungen auf den gleichen Objektpunkt schauen, sollten deswegen einen möglichst großen Abstand haben. Dabei ist die Nutzung mehrerer Pixel pro Kanal hierfür zwar sinnvoll, aber nicht zwingend notwendig. Alternativ können unmittelbar nebeneinander auch Kanäle mit jeweils nur einem Pixel angeordnet sein, die aber in stark unterschiedliche Richtungen blicken, sodass sie mit Kanalpaaren auf der gegenüberliegenden Seite der Kamera ein Schneiden der optischen Achsen ermöglichen. Durch diese Anordnung wird eine stereoskopische 3D-Bildaufnahme bzw. eine Abstandsmessung, d.h. Triangulation, ermöglicht, da hierfür unter verschiedenen Winkeln auf den gleichen Objektpunkt geschaut werden muss.
- Durch die Nutzung mehrerer Detektorpixel pro Kanal kann die notwendige Kanalzahl verringert werden. Ein Kanal kann durch die Nutzung mehrerer Detektorpixel, welche unterschiedlich gegenüber der Mikrolinse dezentriert sind, gleichzeitig verschiedene Blickrichtungen abdecken. Weniger notwendige Kanäle bedeutet somit, dass die Gesamtfläche der Kamera kleiner wird. Anamorphotische bzw, elliptische Linsen können trotzdem zur Korrektur von außeraxialen Bildfehlern eingesetzt werden, wenn die Detektorpixel spiegelsymmetrisch bezüglich der Mikrolinsenmitte angeordnet sind, da sie jeweils den Einfallswinkel korrigieren.
- Eine weitere Variante sieht die Möglichkeit von Farbaufnahmen durch diffraktive Strukturen auf oder vor den Mikrolinsen vor, wobei diese Gitter wahlweise über das Array konstant sein können, aber auch von Kanal zu Kanal variable Parameter, wie Orientierung, Blaze oder Periode besitzen können (strukturierte Gitter). Mehrere gleichartige Pixel geeigneten Abstandes in einem Kanal nehmen das durch das Gitter räumlich getrennte Spektrum auf. Im Allgemeinen kann das Gitter auch durch andere dispersive Elemente ersetzt werden, die ein Ablenken unterschiedlicher Wellenlängen auf getrennte Pixel ermöglichen. Der einfachste denkbare Fall hierfür wäre die Nutzung der chromatischen Queraberrationen zur Farbaufteilung, wobei gänzlich auf zusätzliche Elemente verzichtet werden kann.
- Eine andere Variante betrifft die Polarisationsempfindlichkeit der Kamera. Zu deren Beeinflussung können verschieden orientierte Metallgitter bzw. strukturierte Polarisationsfilter vor sonst gleichartigen elektronischen Pixeln in jedem Kanal angeordnet werden. Das Zentrum der Pixelgruppe befindet sich an der gleichen Stelle wie die einzelnen Pixel bei dem System, das pro Kanal einen Pixel aufweist, und ist von der radialen Koordinate des betrachteten Kanals im Array abhängig. Alternativ können die Polarisationsfilter auch in der Ebene der Mikrolinsen integriert, z.B. auf diese aufgebracht werden, wobei dann ein Kanal nur eine bestimmte Polarisationsrichtung detektieren kann. Benachbarte Kanäle werden dann mit unterschiedlich orientierten Polarisationsfiltern ausgestattet.
- Eine weitere Variante sieht einen abbildenden Farbsensor vor, wobei alternativ zu der normalerweise durchgeführten RGB-Farbkodierung hier eine Anpassung an das zu verarbeitende Farbspektrum durch entsprechende Wahl der strukturierten Filter erfolgt.
- Die Pixelgeometrie kann beliebig an die Symmetrie der Abbildungsaufgabe angepasst werden, z.B. kann alternativ zur kartesischen Anordnung gemäß Figur 11a eine radialsymmetrische (Fig. 11b), eine hexagonale (Fig. 11c), bzw. anderweitig in ihrer Geometrie angepasste Anordnung der Facetten gewählt werden.
- Gemäß einer weiteren Ausführungsform kann auch eine Kombination mit Flüssigkristallelementen (LCD) erfolgen. Die Polarisationseffekte können genutzt werden, um z.B. elektrisch schaltbare oder verschiebbare oder polarisierbare Lochblenden über sonst fixen, dichtgepackten Detektorarrays anzuordnen. Hierdurch wird eine hohe Anzahl von Freiheitsgraden der Abbildung erreicht.

Die hier beschriebenen Funktionen können auch durch die Integration der die Pixel des einzelnen Kanals unterscheidenden Strukturen/Elemente in die Ebene der Mikrolinsen erzielt werden. Hierbei ist dann wiederum nur ein elektronischer Pixel pro Kanal nötig und die Kanäle unterscheiden sich in ihren optischen Funktionen und nicht nur in ihren Blickrichtungen. Eine gröbere und einfachere Strukturierung der Elektronik ist die positive Folge. Nachteil ist die u.U. notwendige größere Kanalzahl und der damit verbundene größere laterale Platzbedarf für eine gleichwertige Auflösung. Auch eine Kombination mehrerer unterschiedlicher Pixel pro Kanal mit unterschiedlichen optischen Eigenschaften verschiedener Kanäle kann sinnvoll sein. Da das beschriebene System im Wafermaßstab hergestellt werden kann, ist es möglich, durch Vereinzelung nicht einzelner Kameras sondern ganzer Gruppen (Arrays von Kameras) die Lichtstärke der Aufnahme zu erhöhen, indem einfach mehrere Kameras das gleiche Bild aufnehmen (Winkelkorrektur kann nötig sein) und diese Bilder dann elektronisch überlagert werden.

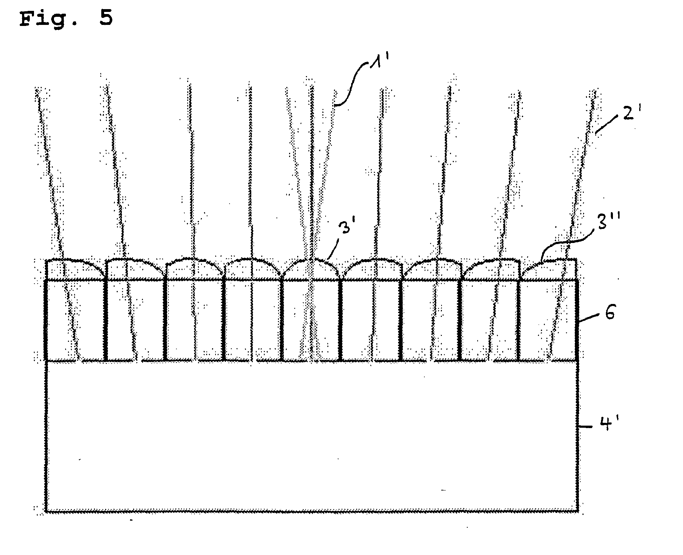

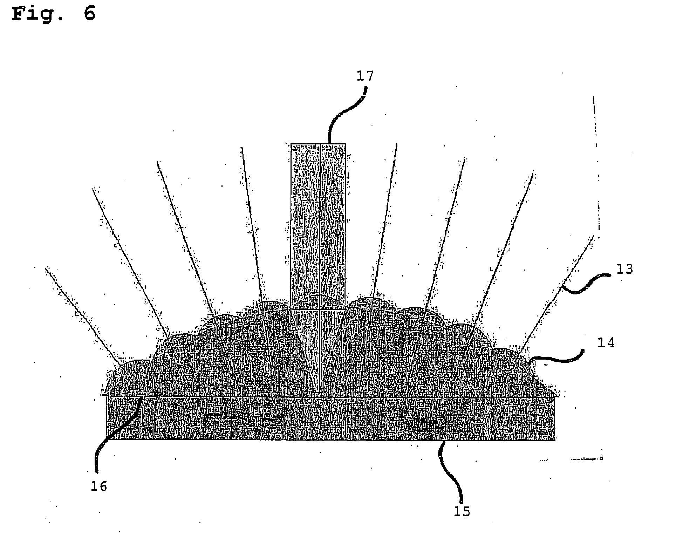

Wesentliche Vorteile des erfindungsgemäßen Bilderfassungssystems können durch folgende gesichtsfeldvergrößernde bzw. den Abbildungsmaßstab verringernde und individuell an Einfallswinkel angepasste Anordnungen erreicht werden:
1. Individuell generierte Off-axis (bzw. dezentrierte) Linsen refraktiv (vg. Fig. 5), diffraktiv und hybrid, die Dezentrierung ist eine Funktion der radialen Koordinate der betrachteten Zelle im Array.
2. Mikrolinsenarrays auf gekrümmten Oberflächen (vgl. Fig. 6), die Basisfläche kann auch konkav geformt sein.
3. Integration von Mikroprismen in Linsenarrays.
4. Kombination diffraktiver linear ablenkender Strukturen mit Mikrolinsenarrays.
5. Mikrolinsenarrays bestehend aus Fresnel- oder diffraktiven Linsen mit jeweiliger Einfallswinkelanpassung.

Alle diese Punkte können als Mikrolinsenarrays mit über dem Array nicht konstanten Parametern zusammengefasst werden.

Anmerkungen zu den einzelnen Methoden:
zu 1. (s. Fig. 5) Off-axis Linsen mit individuellen Parametern der einzelnen Linsen, wie Dezentrierung und Brennweite, sowie konische oder Asphären- Parameter, können z.B. mit Hilfe eines Laserschreibers mit möglicher nachfolgender Abformung generiert werden. Diese individuellen Linsen erlauben die Anpassung der Linsenparameter zur korrekten Einstellung der Ablenkrichtung, als auch die Korrektur der off-axis Aberrationen für den zentralen Hauptstrahl. Die Linsen sind dezentriert über dem Zentrum der Zellen, um eine Ablenkung zu bewirken. Diese Funktion kann auch als Prismenwirkung interpretiert werden. In dieser Ausführung können die Pinholes zentriert in den individuellen Zellen verbleiben, aber auch als Funktion der radialen Koordinate der betrachteten Zelle im Array aus der Mitte der Zelle versetzt sein. Dies verursacht zusätzlich zu der Dezentrierung der Linse
eine weitere Vergrößerung des Gesichtsfeldes. zu 2. (s. Fig. 6) Mikrolinsenarrays auf gekrümmten Oberflächen können ebenfalls-mit Hilfe eines Laserschreibers und Abformung oder durch Abformung konventionell erzeugter Mikrolinsenarrays mit deformierbaren Prägestempeln generiert werden. Je nach Anwendung können alle Mikrolinsen die gleichen Parameter besitzen, oder die Linsenparameter müssen variiert werden, dass jede Mikrolinse stets auf den entsprechenden Rezeptor tatsächlich fokussiert (vgl. Fig.6). Trennwände zur Vermeidung des Übersprechens sind auch hier vorteilhaft. Durch die Anordnung der Mikrolinsenarrays auf einer gekrümmten Oberfläche sind die optischen Achsen der Anordnung automatisch geneigt. Off-axis Aberrationen werden vermieden, da die zentralen Hauptstrahlen stets senkrecht durch die Linsen gehen.
zu 3. Analog 1. refraktive ablenkende Struktur, eventuell auf getrennten Substraten.
zu 4. Die Funktion einer off-axis Linse kann auch durch Kombination eines Schmelzlinsenarrays von identischen Linsen mit diffraktiven, linear ablenkenden, individuell als Funktion der radialen Koordinate der Zelle im Array an die Zelle angepasste Strukturen erzielt werden --> hybride Strukturen
zu 5. Die mit Hilfe eines z.B. Laserschreibers erzeugbaren Strukturhöhen sind begrenzt. Mikrolinsenarrays mit Linsen hoher Scheitelhöhe und/oder starker Dezentrierung können schnell diese Maximalwerte überschreiten, wenn glatte, ununterbrochene Strukturen für die einzelnen Linsen gefordert werden. Die Unterteilung der glatten Linsenstruktur in einzelne Segmente und jeweilige Herabsetzung auf das niedrigst mögliche Höhenniveau (große ganzzahlige Vielfache von 2π) resultiert in einer Fresnellinsenstruktur niedrigerer Scheitelhöhe mit jeweiliger Einfallswinkelanpassung, die im Extremfall sehr kleiner Perioden in diffraktive Linsen übergeht.

Durch die Aufweitung des Gesichtsfeldes bei gleichbleibender Gesamtbildfeldgröße und Größe des Akzeptanzwinkels der einzelnen optischen Kanäle kann weiterhin eine sinnvolle Anpassung des Samplingwinkels an den Akzeptanzwinkel erreicht werden.

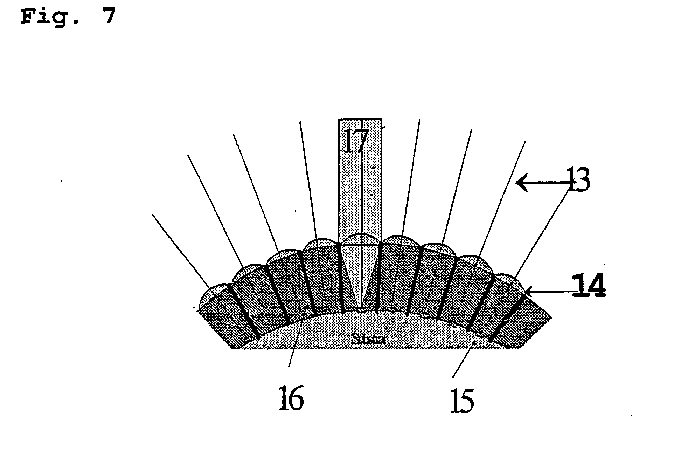

Eine deutliche Verbesserung der Eigenschaften der beschriebenen Erfindung kann durch eine zusätzliche Anordnung der Detektoren auf einer gekrümmten Basisfläche, wie in Fig. 7 dargestellt, erreicht werden. Der Krümmungsradius der Kugelschale, auf der sich die Detektoren befinden, ist gerade so viel kleiner zu wählen, als der der Kugelschale, auf der sich die Mikrolinsen befinden, dass Mikrolinsen gleicher Brennweite auf der ersten Kugelschale exakt auf die Rezeptoren auf der zweiten Kugelschale fokussieren. Die beiden Kugelschalen sind konzentrisch. Durch die Wahl dieser Anordnung resultiert die Abbildung eines großen Gesichtsfeldes, ohne off-axis-Aberrationen, da ein optischer Kanal für einen gerade durch dieses abzubildenden Objektpunkt stets achsensymmetrisch ist. Identische Mikrolinsen können eingesetzt werden.

In der Natur vorkommende abbildende Systeme, d.h. Augen, besitzen, soweit uns bekannt, ohne Ausnahme gekrümmte Retinas (natürliche Rezeptorarrays). Dies gilt sowohl für Einzelkammeraugen, als auch für Facettenaugen. Durch die Krümmung der Retina wird eine deutliche Reduktion der feldabhängigen Aberrationen (Bildfeldwölbung, Astigmatismus) und damit ein homogeneres Auflösungsvermögen und eine gleichmäßigere Ausleuchtung über das Gesichtsfeld erzielt. Bei Facettenaugen wird dadurch und durch die gleichzeitige Anordnung der Mikrolinsen auf gekrümmten Basisflächen ein sehr großes Gesichtsfeld ermöglicht. Selbst mit einfachen Linsensystemen können so gut aufgelöste Bilder der Umwelt erzeugt werden.

Die wesentlichen Vorteile einer gekrümmten gegenüber einer planaren Anordnung sind:
- Großes Gesichtsfeld resultiert automatisch
- Jeder Kanal arbeitet "on axis" für die zu verarbeitende Blickrichtung, und ist damit frei von feldabhängigen Aberrationen und vom Abfall der relativen Beleuchtungsstärke über das Gesichtsfeld ("cos^{Λ}4-Gesetz")

Die in den letzten Jahrzehnten etablierte Halbleitertechnologie und die aus ihr hervorgegangene Mikrooptiktechnologie sind planare Technologien. Deshalb stehen z.B. bisher nur ebene optoelektronische Bildsensoren zur Verfügung und es gibt nur planare Mikrolinsenarrays. Aufwendiges Optikdesign und voluminose, vielelementige Optiken sind die Folge der notwendigen Korrektur für eine ebene Bildebene, um qualitativ hochwertige Abbildungen zu erzeugen. Die Entwicklung gekrümmter optoelektronischer Bildsensoren und damit Übernahme eines über Jahrmillionen in der Natur als optimales Design genutzten Konzeptes verspricht eine deutliche Vereinfachung der nötigen Optiken mit Einfluß auf Preis, Volumen und Einsatzgebiet zukünftiger Produkte. Neben der inhärenten Aberrationskorrektur könnten völlig neue Applikationen wie z.B. Rundumsicht ermöglicht werden.

Künstliche Äquivalente zu diesem natürlichen Ansatz können auf Basis folgender neuartiger Mikrooptiktechnologien erreicht werden:
- Generation von Mikrolinsenarrays auf konvex oder konkav, zylindrisch oder sphärisch geformter Basisfläche (Nutzung Laserschreiber NT) oder Abformung planar erzeugter Mikrolinsenarrays mittels flexiblen Silikonwerkzeuges auf gekrümmter Basis und
- Wände zur optischen Isolation der Kanäle sind ebenfalls auf einer gekrümmten Basisfläche angeordnet, d.h. sie umschließen seitlich keine quaderförmigen transparenten Volumina zwischen Linse und deren Bildebene, sondern kegel- oder pyramidenstumpfförmige Volumina.

Für Empfängerarrays auf gekrümmten Basisflächen sind unter anderem folgende drei Herstellungstechnologien denkbar:
- Konventionell erzeugte Bildsensoren werden bis auf wenige µm oder 10 µm stark abgedünnt und auf gekrümmte Basisflächen aufgebracht und möglicherweise durch die Rückseite beleuchtet. Aufgrund bei der Wölbung auftretender mechanischer Spannungen scheint eine zylindrische Krümmung kurzfristig erfolgversprechender als eine sphärische Wölbung, welche allerdings nicht ausgeschlossen ist. Durch eine zylindrische Wölbung (Krümmungsradius bis 2-3 cm) können bereits zahlreiche Anwendungen, die nur in einer Richtung eines großen Gesichtsfeldes bedürfen bedient werden.
- Strukturierung der Optoelektronik direkt auf gekrümmte Basisflächen mittels angepasster lithographischer Methoden (z.B. Laserschreiber NT). Die Erzeugung sphärischer Krümmungen ist hier nicht wesentlich kritischer/aufwendiger als die von zylindrischen anzusehen. Allerdings ist dies eine völlig neuartige Technologie für die Erzeugung von Optoelektronik.
- Die Polymerempfängerarrays werden in Form einer Folie auf gekrümmte Träger aufgezogen.

Ebenso ist eine biegsame Version der gesamten flachen Kamera denkbar, da das flache Objektiv potentiell in einer deformierbaren Folie replizierbar ist und unter Nutzung von Polymerempfängerarrays auch die Elektronik entsprechende Krümmungen verkraften könnte. Damit ließe sich eine Kamera ermöglichen, mit der man ein deutlich ausgedehntes Objektfeld in nur einigen Millimeter Entfernung beobachten kann. Das Gesichtsfeld wäre dann durch die Wahl des Krümmungsradius der Basis, auf welche die Kamera aufgezogen wird mit einstellbar.

Für eine industrielle Fertigung des ultraflachen Objektives scheint das gleichzeitige vorder- und rückseitige Heißprägen/UV-Guss in eine dünne Platte bzw. Folie, die auf das Sensorarray einfach aufgelegt und verklebt werden kann, besonders vorteilhaft. Hierbei werden auf der Vorderseite die Linsenarrays abgeprägt und auf der Rückseite die gekreuzte Gräben, welche durch nachfolgendes Auffüllen mit schwarzer bzw. absorbierender Vergußmasse die optisch isolierenden Wände der Kanäle sind. Die Abformwerkzeuge der Linsenarrays für Heißprägen können z.B. durch galvanische Abformung von den Urformen erzeugt werden, während für den UV-Guss transparente Werkzeuge notwendig sind. Urformen/Werkzeuge der optischen Strukturen können, unabhängig davon ob gleichartige Linsen oder Linsen variierender Parameter ("gechirpte Linsenarrays") eingesetzt werden, z.B. durch den Reflow-Prozeß, Grautonlithographie, Laserschreiben, Ultrapräzisionsbearbeitung, Laserablation und Kombinationen dieser Technologien erzeugt werden und können auch aus Linsen mit integrierten Prismen oder Gittern bzw. aus relativ zum Kanalmittelpunkt versetzten Linsensegmenten bestehen. Die Urformen/Werkzeuge für die gekreuzten Wände können z.B. durch Lithographie in mit sehr hohem Aspektverhältnis strukturierbarem Photolack (SU8) oder durch Ultrapräzisionsbearbeitung, wie Formbohren von runden oder Fräsen von quadratischen bzw. rechteckigen Grabenstrukturen, den Bosch-Silizium-Prozess (tiefes Trockenätzen mit sehr hohem Aspektverhältnis), Nassätzen von Silizium in KOH (anisotrop), den LIGA-Prozess oder durch Laserablation generiert werden. Eine Erzeugung dieser Wände durch eine flächige Belichtung eines rückseitig unstrukturierten Substrates mit einem Hochleistungslaser, sog. Excimerlaser, durch eine lithographische Maske mit gekreuzten Stegen und resultierende Schwärzung der belichteten Bereiche ist ebenso denkbar, wobei die schwarzen Wände mit einem Beschuss erzeugt werden. Der gleiche Effekt kann durch eine Bearbeitung des Materials mit einem fokussierten Laserbündel hoher Leistung erreicht werden, wobei die gekreuzten Wände dann als Bahnen einer scannenden Ablenkung des Laserfokus' entstehen. Hier werden die schwarzen Wände ins Material geschrieben.

Bei einer Herstellung der Urformen/Werkzeuge durch Ultra-Präzisionsbearbeitungsmaschinen resultiert möglicherweise eine große Oberflächenrauhigkeit. Diese kann z.B. durch Spraycoating ("Sprühbelackung") mit einem dünnem Polymerfilm passender Brechzahl ausgeglichen bzw. minimiert werden (Prismen, asphärische Linsensegmente, (geblazte) Gitter, gekreuzte 1D-array Strukturen).

Ein flächiges Verkleben der ultraflachen Optik mit dem Sensor führt zu einer deutlichen Reduktion der Fresnelreflexionsverluste, da zwei Grenzflächen zu Luft eliminiert werden.

Die Form der schwarzen Wände muss nicht notwendigerweise so sein, dass die transparenten Volumina der Kanäle Quader sind, sondern kann auch in transparenten kegel- oder pyramidenförmigen Abstandsstrukturen zwischen Linsenarray und der Bildebene resultieren.

Eine Replikation der beschriebenen Strukturen von der Rolle in Folie erlaubt eine kostengünstige Endlosfertigung. Die Herstellung dünner Platten ist ebenso denkbar. Viele dünne Objektive werden gleichzeitig erzeugt.

Als Replikationstechnologien sind die Abformung in W-härtbarem Polymer (UV-Reaktionsguss), das Prägen oder Drucken auf Kunststofffolie (doppelseitig), die Ausführung als Kunststoff-Formpress- oder Spritzgussteil, das Heißprägen dünner Kunststoffplatten und der UV-Reaktionsguss direkt auf Optoelektronik-Wafer einsetzbar.

Als mögliche Anwendungen für die genannte Erfindung ist der Einsatz als integraler Bestandteil in flachbauenden Kleingeräten wie beispielsweise Uhren, Notebooks, PDAs oder Organizers, Mobiltelefonen, Brillen, Kleidungsstücken, zur Überwachung und Sicherheitstechnik, sowie zur Kontrolle und Durchsetzung von Zugangs- oder Nutzungsberechtigungen denkbar. Eine weitere, hoch attraktive Anwendungen ist der Einsatz als Kamera in einer Kreditkarte bzw. im allgemeinen Fall Chipkarte. Eine Kamera als Aufkleber und als ultraflaches Bilderfassungssystem für Machine Vision auch im Automotive Bereich sowie auch in der Medizintechnik wird durch die erfindungsgemäße Anordnung ermöglicht.

Die bildaufnehmenden Pixel in der Kamera müssen nicht notwendigerweise dicht gepackt sein, sondern können sich z.B. auch abwechseln mit gering ausgedehnten Leuchtquellen, z.B. LEDs (auch in Farbe). So sind bildaufnehmende und bildwiedergebende Pixel gleichmässig verteilt in großen Arrays, zur gleichzeitigen Bildaufnahme und Bildwiedergabe möglich.

Zwei solcher Systeme kann man auf Vorder- und Rückseite eines undurchsichtigen Objektes anbringen, wobei jedes System jeweils das durch das andere System aufgenommene Bild wiedergibt. Ist die Größe des Objektes ca. gleich der Kameraausdehnung kann man auf die aus z.B. Pitchdifferenz von Linsen- und Pinholearray folgenden geneigten optischen Achsen verzichten und die Pinholes bzw. Detektoren direkt auf den Achse der Mikrolinsen anordnen, es folgt eine 1:1 Abbildung. Folgende Einsatzgebiete sind beispielsweise denkbar:
- "Wearable displays" kombiniert mit entsprechender Bildaufnahme -> Tarnkleidung (Camouflage) ("durchsichtiger Mensch"), Tarnung von Fahrzeugen, Flugzeugen und Schiffen durch Anbringen auf der Außenhaut -> "Durchsichtigkeit"
- Klebefolien bzw. Tapeten -> Durchsichtige Tür, durchsichtige Wand, durchsichtige ...

Das erfindungsgemäße Bilderfassungssystem kann ebenso im Bereich der Endoskopie eingesetzt werden. So kann ein gekrümmter Bildsensor z.B. auf einem Zylindermantel aufgezogen werden. Dies ermöglicht eine Rundumsicht in für die Endoskopie zugänglichen Organen.

Eine weitere Verwendung betrifft die Sonnenstandsdetektion bzw. die Bestimmung der relativen Lage einer punktförmig oder nur gering ausgedehnten Lichtquelle zu einer mit der flachen Kamera fest verbundenen Referenzfläche. Hierfür ist ein verhältnismäßig hohes und eventuell asymmetrisches Gesichtsfeld erforderlich, ca. 60 ° x 30 ° volle Winkel.

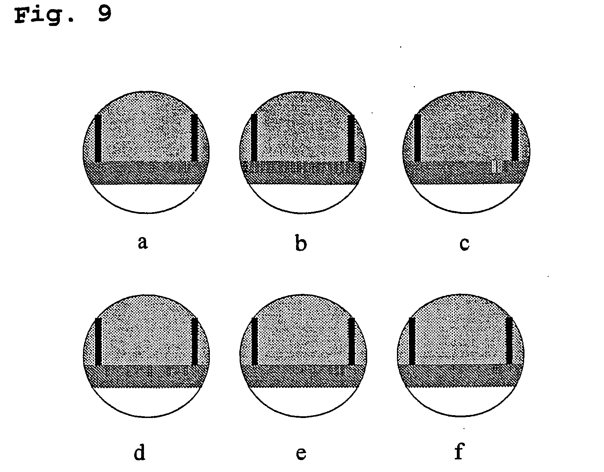

Eine weitere Verwendung betrifft die Aufnahme und Verarbeitung von sog. Smart-Labels. Dadurch kann z.B. durch Nutzung von Kanälen mit mehreren Pixeln gemäß den Figuren 9b oder 9d eine rekonfigurierbare Mustererkennung realisiert werden. Dies bedeutet, dass die Blick Richtung jedes Kanals elektronisch umgeschaltet werden kann, wodurch sich eine Umverteilung in der Zuordnung von Bild- und Objektinformationen ergibt. Dies kann z.B. genutzt werden, um von Zeit zu Zeit andere Objektmuster zu definieren, ohne die Kamera austauschen zu müssen. Ebenso betrifft die Verwendung die Erkennung und Identifizierung von Logos.

Ein weiteres Anwendungsfeld betrifft die Mikrosystemtechnik, z.B. als Kamera zur Beobachtung des Arbeitsraumes. So können beispielsweise Greifer an den Backen oder Armen entsprechende Bilderfassungsysteme aufweisen. Hierzu gehört auch die Anwendung im Bereich "Machine Vision", z.B. kleinbauende Kameras für Pick and Place-Roboter mit starker Vergrößerung und gleichzeitig hoher Tiefenschärfe aber auch bis hin zur Rundumsicht, z.B. für Bohrlochinspektionen. Eine flache Kamera besitzt hier enorme Vorteile, da auch gar keine hohe Auflösung sondern lediglich hohe Tiefenschärfe benötigt wird.

Eine weitere Verwendung betrifft die 3D-Bewegungsverfolgung, z.B. der Hand einer Person oder von ganzen Person zur Umsetzung in 3D-virtual-reality oder für die Überwachungstechnik. Hierfür werden kostengünstige großflächige Empfängerarrays benötigt, was durch die erfindungsgemäßen Bilderfassungsysteme erfüllt ist.

Weitere Verwendungen betreffen die Iriserkennung, die Fingerprinterkennung, die Objekterkennung und die Bewegungsdetektion.

Ebenso sind auch sensorische Anwendungsfelder im Automobilbereich bevorzugt. Hierzu zählen z.B. Überwachungsaufgaben im Fahrzeuginnen- oder außenraum, z.B. hinsichtlich des Abstandes, der Kollisionsgefahr des Außenraums, des Innenraums oder der Sitzbelegung.

Heutige optische Kameras benötigen einen zu hohen Platzbedarf (Fahrzeughimmel, Rückspiegel, Windschutzscheibe, Stoßstange, etc.), sind nicht direkt integrierbar und für universellen Einsatz zu teuer. Aufgrund der extrem flachen Bauweise sind derartige Kamerasysteme ideal, um den Innenraum (z.B. Fahrzeughimmel) eines Automobils auszustatten und zu überwachen, ohne dabei übermäßig ins Auge zu fallen und ohne ein erhöhtes Verletzungsrisiko bei eventuellen Unfällen darzustellen. Sie können relativ einfach in bestehende Konzepte integriert werden. Besonders interessant sind im Innenraum angebrachte bildgebende Systeme zur intelligenten und individuellen Steuerung des Airbags je nach Sitzposition der Person. Für die bekannten Probleme im Zusammenhang mit der Airbagtechnologie (Out-of-Position-Problem, ungerechtfertigte Auslösung) könnten intelligente bildgebende Sensoren Lösungen bieten.

Ultra-flache Kamerasysteme können problemlos in Stoßstangen integriert werden und dabei nicht nur als Abstandssensoren fungieren, sondern zur Erkennung von Hindernissen, Objekten und Fußgängern, zur Verkehrsführung sowie zur Pre-Crash-Sensorik dienen. Im mittleren Überwachungsbereich von ca. 50 bis 150 m kommt dem Einsatz von Bildsensoren, neben reinen Abstandssensoren (Radar-Lidartechnik), die keine oder nur geringe Ortsauflösung bieten, eine zunehmende Bedeutung zu. Es ist auch ein Einsatz von flachen Kameras im Infraroten Spektralbereich denkbar. Die flache und unauffällige Bauweise stellt einen eindeutigen Vorteil dieser innovativen Kamerakonzepts gegenüber herkömmlichen Kamerasystemen dar.

Eine weitere zukünftige Einsatzmöglichkeit im Bereich der Automobiltechnik liegt darin, ultraflache Kamerasysteme als bilderfassende Systeme zur physischen und logischen Zugangskontrolle und zur Durchsetzung von Nutzungsberechtigungen einzusetzen. Dabei könnten ultra-flache Kamerasysteme in Schlüssel integriert werden oder im Innenraum angebracht sein und eine Authentifizierung des Benutzers auf Basis biometrischer Merkmale (z.B. Gesichtserkennung) ermöglichten.

Weitere Anwendungsgebiete ergeben sich als integrierbarer bildgebender Sensor bei innovativen Fahrerassistenzsystemen für aktive Sicherheit und Fahrkomfort:
- Fahrspurerkennung,
- Fußgänger- und Hindernisüberwachung
- Totwinkelüberwachung Fahrzeuginnenraumüberwachung, Wachsamkeit des Fahrers, Komfort
- Nachtsichtkamera

Im Bereich der Luftfahrtindustrie wie z.B. der integrierten und intelligenten Cockpit-Überwachung durch unauffällige, extrem flache Kamerasysteme.

Sowohl CMOS- als auch CCD-Sensoren können zur photoelektrischen Bildwandlung genutzt werden. Besonders attraktiv sind hier abgedünnte und rückseitig beleuchtete Detektoren, da sie sich besonders einfach für eine direkte-Verbindung mit der Optik eignen und außerdem weitere Vorteile bzgl. der Sensitivität aufweisen.

Anhand der nachfolgenden Figuren soll der erfindungsgemäße Gegenstand näher erläutert werden, ohne diesen auf die speziellen Ausführungsvarianten einschränken zu wollen.
Fig. 1 zeigt eine Seitenansicht einer Ausführungsvariante des ultraflachen Kamerasystems notwendigerweise bestehend aus Mikrolinsenarray, Substrat und Pinhole-Array. Durch einen etwas geringeren Pitch des Pinhole-Arrays verglichen mit dem Linsenarray wandert die Richtung der optischen Achsen nach außen, wenn man zu äußeren Kanälen geht. Diese Anordnung kann direkt auf eine Elektronik mit passendem Pixelpitch abstandslos aufgesetzt werden.
Fig. 2 zeigt eine Ausführungsvariante analog Fig. 1, aber mit Lichtschutzwänden. Eine Blendenschicht befindet sich auf einem Substrat, welches auch durch die photosensitive Elektronik als Träger ersetzt werden kann. Transparente Türme bilden den Abstandshalter zwischen Mikrolinsen und Pinholes. Die Zwischenräume zwischen den Türmen werden mit nichttransparentem (absorbierendem) Material gefüllt, um eine optische Isolierung der individuellen Kanäle zu erzielen.
Fig. 3 zeigt einen möglichen Herstellungsprozess für die Variante in Fig. 2. Nach Variante 7 werden Substrate mit dem Pinhole-Array beschichtet. Nach Variante 8 werden SU8 Podeste (Türme) aufgebracht, die Zwischenräume zwischen den Türmen werden mit absorbierendem Material (PSK) gefüllt. Nach Variante 9 werden Mikrolinsenarrays justiert zu den Pinhole-Arrays aufgebracht.
Fig. 4 zeigt eine Darstellung einer Ausführungsvariante. 300 µm dickes Substrat mit Pinhole-Array auf der Rückseite und UV-abgeformten Mikrolinsenarray mit einer Polymerdicke von 20 µm auf der Vorderseite. Aus der Pitchdifferenz zwischen Mikrolinsen- und Pinhole-Array resultieren geneigte optische Achsen und damit eine effektive Verkleinerung. Diese Anordnung kann direkt auf eine bildgebende Elektronik mit Pixeln passenden Pitches aufgeklebt werden.
Fig. 5 zeigt eine ultraflache Kamera mit Linsenarray aus Off-axis Linsensegmenten, die Dezentrierung ist abhängig von der Blickrichtung des Kanals bzw. radialen Position im Array (Prismawirkung).
Fig. 6 zeigt eine ultraflache Kamera mit Linsenarray auf gekrümmter Basis, die Brennweiten der Linsen sind kanalabhängig. Trotz großen Gesichtsfeldes gibt es keine Off-axis-Aberrationen für die zentralen Hauptstrahlen, da diese stets senkrecht auf der Linsenbasis stehen. Ebenso ist eine Zerstreuungslinse als Basisfläche denkbar, das resultierende Gesamtbild ist dann umgekehrt.
Fig. 7 zeigt eine ultraflache Kamera mit Linsenarray und Detektorarray auf gekrümmter Basis. Die Brennweiten der Linsen können hier alle gleich sein. Trotz großen Gesichtsfeldes gibt es keine Off-axis Aberrationen für die zentralen Hauptstrahlen, da diese stets senkrecht auf der Linsenbasis stehen. Ebenso ist eine Zerstreuungslinse als Basisfläche denkbar, das resultierende Gesamtbild ist dann umgekehrt.
Fig. 8 zeigt eine Seitenansicht eines erfindungsgemäßen Bilderfassungssystems mit einem Pixel pro optischem Kanal.
Fig. 9 zeigt verschiedene Varianten für die Nutzung mehrerer Pixel pro optischem Kanal.
Fig. 10 zeigt Beispiele für die Integration zusätzlicher optischer Funktionen in dem erfindungsgemäßen Bilderfassungssystem.
Fig. 11 zeigt Beispiele für geometrische Anordnungen der optischen Kanäle.
Fig. 12 zeigt schematisch das Herstellungsverfahren der erfindungsgemäßen Bilderfassungssysteme.
Fig. 13 zeigt verschiedene Varianten für die geometrische Ausbildung der optischen Kanäle.
Fig. 14 zeigt das erfindungsgemäße Bilderfassungssystem in Kombination mit einer Flüssigkeitslinse (elektronischer Zoom).

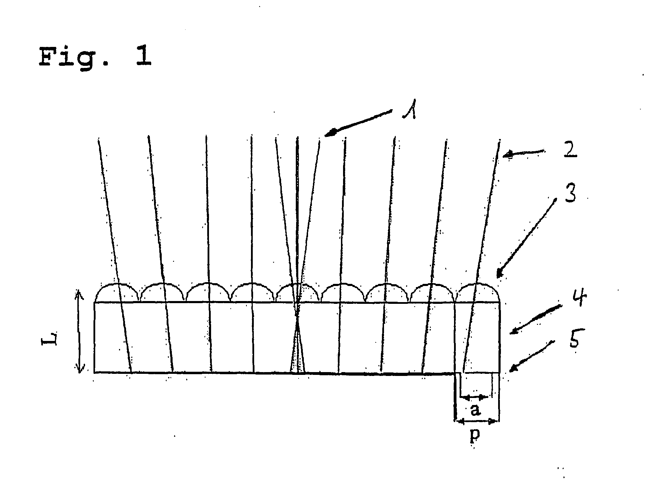

Fig. 1 zeigt eine Variante des erfindungsgemäßen Gegenstandes. In Fig. 1 bedeuten:
1: Akzeptanzbereich eines opt. Kanals (Δϕ)
2: Sampling des FOV (Samplingwinkel ΔΦ)
3: Linsenarray, Linsen mit Durchmesser D und Brennweite f sind zentriert in Zellen mit Pitch p
4: Substrat
5: Pinhole array (in Metallschicht), Pinhole Versatz in Zellen bestimmt Blickrichtung, Durchmesser des Pinholes d bestimmt Akzeptanzwinkel Δϕ

Auf verschiedene Weisen erzeugbare (hier durch Pitch-differenz des Mikrolinsenarrays und des Pinhole-Arrays) nach außen an Neigung zunehmende optische Achsen zur Erzielung der (negativen) vergrößerten Abbildung bedeuten, dass eine Quelle in der Objektverteilung nur ein Signal in einem entsprechenden photosensitiven Pixel liefert, wenn sie sich auf oder nahe der optischen Achse des entsprechenden optischen Kanals befindet. Entfernt sich der Quellpunkt von der betrachteten optischen Achse, so sinkt das Signal des entsprechenden Detektors, aber das in einem anderen, zu einem benachbarten optischen Kanal gehörigen, an dessen optische Achse sich der Quellpunkt nun annähert, steigt möglicherweise. Auf diese Weise wird eine Objektverteilung durch die Signalstärken der entsprechenden angesprochenen Detektorpixel repräsentiert.

Diese Anordnung liefert ein Abbild des Objektes mit deutlich stärkerer Vergrößerung als hinter einer individuellen Mikrolinse zu beobachten ist, bei deutlich kürzerer Baulänge als klassische Objektive mit vergleichbarer Vergrößerung.

Die Neigung der optischen Achsen kann sich als Funktion der radialen Koordinate der betrachteten Zelle im Array sowohl nach außen (Fig. 1), d.h. von der optischen Achse des Arrays weg, als auch nach innen erhöhen, d.h. hin zu der optischen Achse des Arrays hin. Es resultiert entweder ein aufrechtes oder ein umgekehrtes Gesamtabbild.

Das Auflösungsvermögen der genannten Erfindung ist durch das Inkrement der Neigung der optischen Achsen, dem Samplingwinkel ΔΦ und durch den Raumwinkel, welcher von einem optischen Kanal als ein Bildpunkt wiedergegeben wird, dem sogenannten Akzeptanzwinkel Δφ, bestimmt. Der Akzeptanzwinkel Δφ ergibt sich aus der Faltung der Punktbildverwaschungsfunktion der Mikrolinse für den gegebenen Einfallswinkel mit der Apertur des Pinholes, bzw. aktiven Fläche des Detektorpixels und der Brennweite der Mikrolinse. Die maximale Zahl der auflösbaren Linienpaare über das Gesichtsfeld ist nun genau die halbe Zahl der optischen Kanäle, wenn deren Akzeptanzwinkel (FWHM) nicht größer als der Samplingwinkel sind (Nyquist Kriterium). Sind die Akzeptanzwinkel jedoch verglichen mit dem Samplingwinkel sehr groß, so spielt die Zahl der optischen Kanäle keine Rolle mehr, sondern die Periode auflösbarer Linienpaare ist so groß, wie der Akzeptanzwinkel (FWHM). Eine sinnvolle Abstimmung von Δφ und ΔΦ ist damit essenziell.

Je nach Größe der photosensitiven Pixel kann die Abdeckung des Detektorarrays mit einem Pinhole-Array nötig sein. Dies steigert das Auflösungsvermögen, verringert jedoch die Sensitivität/Transmission der Anordnung aufgrund der geringeren Detektorfläche.

Alternativ zu nur einem aktiven Pixel pro optischem Kanal können auch mehrere Pixel unterschiedlicher Funktionen in einem optischen Kanal eingesetzt werden. So können z.B. verschiedene Farbpixel (RG) in einer Zelle angeordnet sein, oder Pixel mit großen Abständen innerhalb einer Zelle, die verschiedene Blickrichtungen (Neigungen der optischen Achsen) realisieren (tasten andere Stellen des Mikrobildes in einer Zelle ab), und durch einen Überlapp mit Blickrichtungen anderer solcher Pixel in weiter entfernten Zellen zur Steigerung der Sensitivität der gesamten Anordnung, ohne Auflösungsverlust bewirken.

Im Rahmen der vorliegenden Erfindung als sinnvoll erachtete und damit angestrebte Pinholedurchmesser liegen von 1 µm bis 10 µm.

In Fig. 2 ist eine ähnliche Anordnung wie in Fig. 1 dargestellt, jedoch mit lithographisch hergestellten Trennwänden zwischen den einzelnen Zellen. In Fig. 2 bedeuten:
1': Akzeptanzbereich eines opt. Kanals (PSF Pinhole/Brennweite)
2': Sampling des FOV (Pinholeversatz/Brennweite)
3': Linsenarray, Linsen zentriert in Zellen
4': Substrat (nur als Träger)
5': Pinholearray (Metallblenden), Pinholeversatz zur Realisierung des FOV
6': Zellen mit Lichtschutzwänden

Diese Lichtschutzwände bewirken, dass Quellpunkte, die sich außerhalb des eigentlichen Gesichtsfeldes eines Kanals befinden, durch diesen auf Detektoren des Nachbarkanals abgebildet werden. Aufgrund der starken off-axis Abberrationen bei der Abbildung schief einfallender Bündel sind die so übertragenen Bildpunkte jedoch stark defokussiert. Eine deutliche Verringerung des Signal-Rausch-Verhältnisses der Abbildung wäre die Folge.

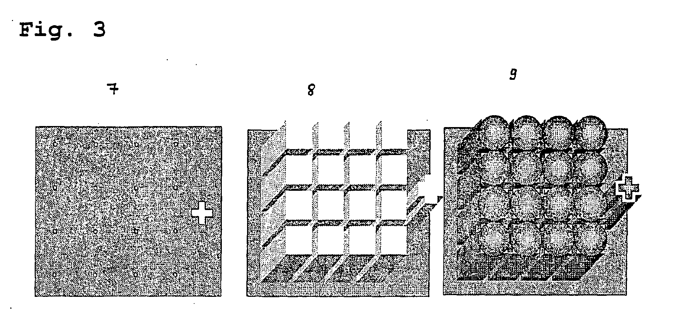

Fig. 3 zeigt eine mögliche lithographische Herstellungsvariante eines Systems mit Lichtschutzwänden. Die flache Kamera kann im Endeffekt als eine dünne Polymerschicht auf die Elektronik aufgebracht werden, die dann gleichzeitig als Substrat dient.

Für die Herstellung der Linsen sind verschiedenste Technologien denkbar. So können in der Mikrooptik etablierte Technologien wie der Reflow-Prozess (für runde oder elliptische Linsen), Abformung von UVhärtbarem Polymer (UV-Reaktionsguß) oder Ätzen (RIE) in Glas eingesetzt werden. Spähren und Asphären als Linsen sind möglich. Weitere Varianten der Herstellung können Prägen oder Drucken auf eine Kunststofffolie sein. Die Ausbildung als Kunststoff-, Formpress-, oder Spritzgussteil bzw. auch als heißgeprägte dünne Kunststoffplatte, in die auch bereits die Trennwände ("Baffles") eingelassen sein können, ist ebenfalls denkbar. Die Linsen können refraktiv, diffraktiv oder refraktiv-diffraktiv (hybrid) ausgebildet sein. Das System kann nach Aufschleudern eines Polymers u. U. direkt auf die Elektronik aufgeprägt oder anderweitig abgeformt werden.

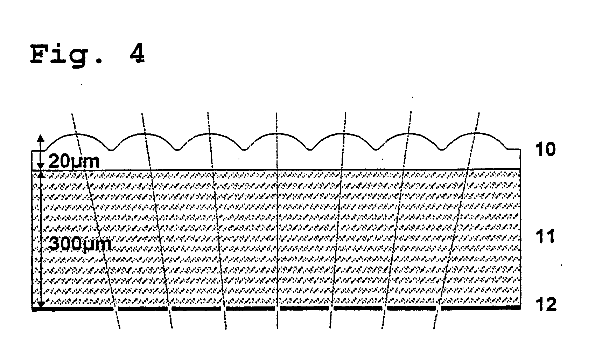

Fig. 4 zeigt eine bereits realisierte Ausführungsvariante. Eine 20 µm dicke Polymerschicht 10 auf der Vorderseite eines 300 µm dicken Glas-Substrates 11 enthält die nötigen Mikrolinsen. Auf der Rückseite des Substrates befindet sich ein Pinhole-Array 12 leicht geringeren Pitches als das Mikrolinsenarray in einer Metallschicht. Diese Anordnung liefert ein Abbild des Objektes mit deutlich stärkerer Vergrößerung als hinter einer individuellen Mikrolinse zu beobachten ist, bei deutlich kürzerer Baulänge als klassische Objektive mit vergleichbarer Vergrößerung. Die Substratdicke ist gleich der Brennweite der Mikrolinsen eingestellt, so dass sich das Pinhole-Array in der Bildebene des Mikrolinsenarrays befindet.

Der Linsendurchmesser beträgt 85 µm, die Größe des abgetasteten Bildfeldes 60 µm x 60 µm, der Pitch der optischen Kanäle ist 90 µm. Das Gesichtsfeld für rotationssymmetrische Linsen ist durch die sinnvolle NA der Linsen von 0,19 auf 15° entlang der Diagonalen eingeschränkt. Die Zahl der optischen Kanäle ist 101 x 101, dem entspricht die Zahl der entstehenden Bildpunkte.

Das zum Abdecken des Detektorarrays nötige Pinhole-Array besteht aus Material geringer/minimaler Transmission. Hierfür eignen sich besonders Metallbeschichtungen. Diese haben allerdings den Nachteil hoher Reflektivität, was zu Streulicht innerhalb des Systems führt. Ein Ersatz der Metallschicht durch ein mit Pinholes strukturiertes schwarzes Polymer ist vorteilhaft zur Reduktion des Streulichtes. Eine Kombination von schwarzer Polymerschicht und Metallschicht erlaubt eine geringe Transmission bei gleichzeitig geringer Reflexion.

Wesentliche Vorteile der hier dargestellten Erfindung sind die Möglichkeiten der Einstellung der Vergrößerung des Gesamtsystems, d. h. dem Verhältnis der Größe des Gesichtsfeldes der Optik zu Bildfeldgröße. Aus der Herstellung einer flachen Kamera mit einem homogenen Linsenarray, d.h. alle Linsen sind äquivalent, in lithographischer Planartechnik resultiert eine Einschränkung des Gesichtsfeldes der Gesamtanordnung. Die volle Größe des Gesichtsfeldes ist dann durch FOV = arctan(a/f) gegeben, wobei a die Größe des abtastbaren Mikrobildes (kann maximal so groß wie der Linsenpitch p werden) und f die Brennweite der Mikrolinse ist (s. Fig. 1). Das Mikrobild kann nur sinnvoll abgetastet werden, solange das abtastende Pinhole nicht aus dem Bildbereich der entsprechenden Mikrolinse herauswandert. Eine Vergrößerung des Bildbereiches kann bei Nutzung des größtmöglichen Füllfaktors für das Mikrolinsenarray nur bedeuten, dass auch der Linsendurchmesser (in quadratischer Anordnung gleich Linsenpitch p) vergrößert werden muss. Damit lässt sich unter der Berücksichtigung von NA=p/2f im Idealfall a=p mit NA als Numerischer Apertur der Mikrolinse obige Gleichung für die Berechnung des Gesichtsfeldes zu FOV = arctan (2NA) umschreiben. Die Größe des Gesichtsfeldes der beschriebenen Anordnung ist damit durch die Größe der Numerischen Apertur der Mikrolinse bestimmt. Eine beliebige Vergrößerung der NA der Linsen ist aufgrund der Zunahme der Größe der Aberrationen nicht möglich, selbst bei Nutzung asphärischer Mikrolinsen durch das große zu verarbeitende Winkelspektrum.

Eine sinnvolle Möglichkeit zur Einstellung der Pitch-differenz zwischen Mikrolinsen- und Pinhole-Array ist Δp=a(1-N/(N-1)) mit N als der Anzahl der Zellen in einer Dimension der flachen Kamera.

Eine Kombination von einer Pitchdifferenz zwischen Mikrolinsenarray und Pinhole-Array mit ablenkenden Elementen (Fig. 5) oder die Anordnung der Linsen bzw. der kompletten optischen Kanäle, also einschließlich Detektoren, auf einer gekrümmten Basisfläche (Fig. 6), erscheint als eine Lösungsmöglichkeit um das Gesichtsfeld bei gleicher Bildfeldgröße zu vergrößern und damit die Vergrößerung der Gesamtanordnung zu verringern. Die Gesichtsfelderweiterung bzw. Verringerung der Vergrößerung durch verschiedene, hier beschriebene und untereinander kombinierbare Methoden ist ein wesentlicher Punkt der vorliegenden Erfindung.

Fig. 6 zeigt ein erfindungsgemäßes Bilderfassungssystem mit einem Linsenarray aus einzelnen Mikrolinsen 14 und einem Detektorarray mit einzelnen Detektoren 15. Das Linsenarray ist dabei auf einer gekrümmten Oberfläche angeordnet. Die optischen Achsen 13 sind aufgefächert, wodurch eine Gesichtsfelderweiterung erreicht wird.

Fig. 7 zeigt ein erfindungsgemäßes Bilderfassungssystem mit einem Linsenarray mit einzelnen Linsen 14 und einem Detektorarray mit einzelnen Detektoren 15 auf gekrümmter Basis. Die Brennweiten der Linsen können hier alle gleich sein. Trotz großen Gesichtsfeldes gibt es keine Off-axis Aberrationen für die zentralen Hauptstrahlen, da diese stets senkrecht auf der Linsenbasis stehen. Ebenso ist eine Zerstreuungslinse als Basisfläche denkbar, das resultierende Gesamtbild ist dann umgekehrt. Essentiell ist auch hier die optische Isolation der einzelnen Kanäle durch geeignete Trennwände zur Unterdrückung von Geisterbildern verursacht durch Übersprechen zwischen benachbarten Kanälen.

Fig. 8 zeigt eine Seitenansicht des erfindungsgemäßen Bilderfassungssystems in planarer Ausführung mit einem Pixel geeigneter Größe pro Kanal. Es besteht aus Mikrolinsenarray 18, abstandsdefinierender Struktur zur Bildebene und optischer Isolation 19 der Kanäle zur Unterdrückung des Übersprechens in einem monolithischen Plättchen 20, welches direkt auf den Bildsensor 21 aufgelegt wird. Durch einen etwas geringeren Pitch der Pixel des Bildsensors verglichen mit dem des Linsenarrays ist in jedem Kanal die relative Position des Sensorpixels zu der Mikrolinse verschieden, wodurch die notwendige Variation der Blickrichtung unter den Kanälen erzielt wird. Der Ausschnitt zeigt die mögliche Pixelposition innerhalb des Kanals für einen Kanal am Rande der Kamera.

Fig. 9 zeigt Möglichkeiten der Nutzung mehrerer Pixel pro Kanal, dargestellt sind jeweils die Ausschnitte in der Bildebene eines Kanals entsprechend Fig. 8.
a) Sub-PSF-Auflösung, d.h. Gruppe sehr kleiner Pixel an Stelle des vorher einzelnen Pixels
b) dichtgepacktes Sensorarray in Bildebene der Mikrolinsen, sog. Megapixelsensor,
c) Farbfilter vor verschiedenen Pixeln eines Kanals erlauben eine Farbbildaufnahme. Hierbei ist zu berücksichtigen, dass verschiedene Farben unter verschiedenen Blickrichtungen aufgenommen werden, d.h. es besteht ein unterschiedlicher Versatz der Farbpixel gegenüber der Mikrolinse. Dies kann durch eine entsprechende Korrektur durch das Verschalten nicht der Farbpixel eines Kanals zu einem Farbbildpixel sondern entsprechend in die gleiche Richtung blickender verschiedener Farbpixel benachbarter Kanäle ermöglicht werden, z.B. roter Pixel von Kanal 1 schaut in die gleiche Richtung wie blauer Pixel von Kanal 2. Ebenso ist die Integration der verschiedenen Farbfilter in die Ebene der Mikrolinsen denkbar, wobei dann verschiedene Kanäle verschiedene Farben detektieren, allerdings die gleiche Blickrichtung haben.
d) Anordnung mehrerer gleichartiger Pixel mit höherem Abstand in einem Kanal, d.h. mehrere Kanäle blicken mit jeweils unterschiedlich relativ im Kanal befindlichen Pixeln in die gleiche Richtung. Die Position der Pixelgruppe relativ zur Linse verschiebt sich leicht von Kanal zu Kanal
e) Anordnung mehrerer gleichartiger Pixel mit geringem Abstand in einem Kanal, z.B. zur Aufnahme eines Spektrums.
f) Der Polarisationsfilter ist direkt in die optoelektronischen Pixel integriert. Alternativ können auch Polarisationsfilter auf oder vor die Mikrolinsen gebracht werden und verschiedene Polarisationsrichtungen durch getrennte Kanäle detektiert werden.

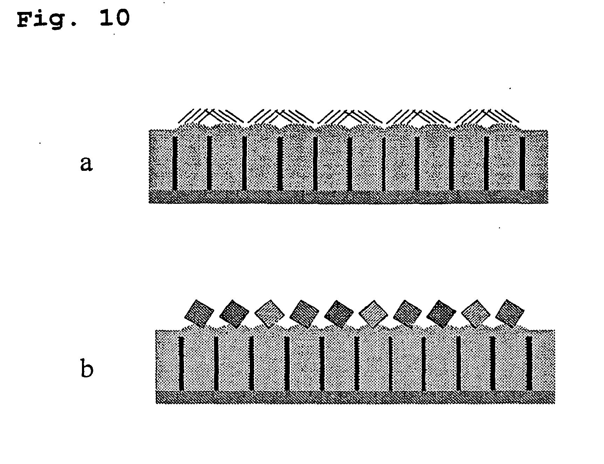

Fig. 10 zeigt die Integration zusätzlicher von Kanal zu Kanal verschiedener optischer Funktionen in die Ebene der Mikrolinsenarrays. So zeigt Fig. 10a einen integrierten Polarisationsfilter oder ein dem gleichen Zweck dienendes Gitter, während in Figur 10b in integrierter Farbfilter dargestellt ist.

Fig. 11 zeigt verschiedene Varianten für die geometrische Anordnung der optischen Kanäle im Array. In Fig. 11a ist eine kartesische Anordnung der optischen Kanäle dargestellt, in Fig. 11b eine radialsymmetrische Anordnung der optischen Kanäle, während in Fig. 11c eine hexagonale Anordnung der optischen Kanäle vorliegt.

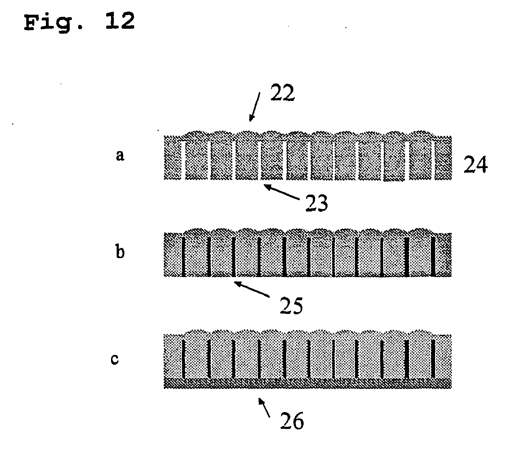

Fig. 12 zeigt schematisch eine industriell relevante Herstellungstechnologie über ggf. gleichzeitige vorder- und rückseitige Abformung des ultraflachen Objektives durch z.B. Heißprägen oder UV-Reaktionsguss und nachfolgenden Verguss mit absorbierendem Material.
a) Vorderseitig werden Linsenarrays 22 (homogen, variable Parameter, zusätzliche integrierte Funktionen (Gitter)) abgeformt. Auf der Rückseite werden Grabenstrukturen 23 in das Plättchen 24 bzw. die Folie möglichst tief eingeprägt. Es resultieren transparente, schwach verbundene Türme, die als Abstandshalter der auf ihnen befindlichen Mikrolinsen bis zu deren Bildebene dienen.
b) Die Zwischenräume zwischen den Türmen werden mit nicht-transparentem (absorbiertem) Material gefüllt, um eine optische Isolierung 25 der individuellen Kanäle zu erzielen.
c) Das resultierende Objektivplättchen bzw. die Folie kann direkt auf den Bildsensor 26 aufgesetzt werden (auch im Wafermaßstab). Hierbei ist je nach eingesetztem Sensorarray eine hochpräzise laterale Justierung notwendig.

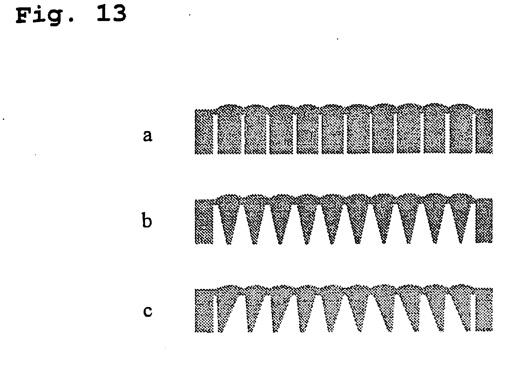

Fig. 13 zeigt verschiedene Formen der aus dem Prägen resultierenden transparenten Türme, sog. Spacingstrukturen.
a) Gerade Wände in z.B. kartesischer Anordnung führen zu Quadern als umschlossene transparente Volumina der Kanäle.
b) Schiefe, kegel- oder pyramidenförmige Wände führen zu Kegel- oder Pyramidenstümpfen als umschlossene transparente Volumina der Kanäle.
   Dies wäre auch gut geeignet zur Abformung auf gekrümmten Oberflächen.
c) Die Verkippung oder die Form der transparenten Volumina (Spacingstrukturen) kann notwendiger
d) weise von Kanal zu Kanal verschieden sein, um an die Neigung der optischen Achse des jeweiligen Kanals angepasst zu sein. Nachfolgend zur Abformung der Spacingstrukturen erfolgt auch hier der Verguss der Rückseite mit absorbierendem Material zur Erzeugung der optischen Isolation der Kanäle.

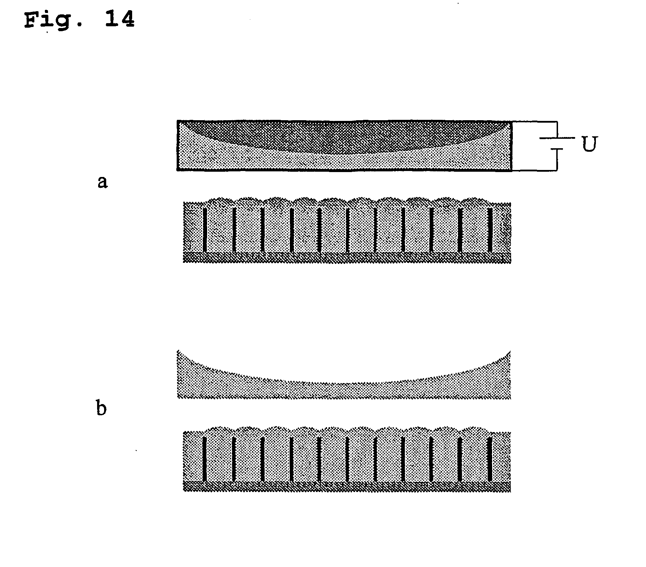

Fig. 14 zeigt eine Kombination des erfindungsgemäßen Bilderfassungssystems mit vorgeschalteter ablenkender Struktur zur Veränderung des Gesichtsfeldes (Zoom).
a) Dies kann z.B. eine Flüssigkeitslinse mit elektrisch einstellbarer variabler Brennweite sein, für einen flexiblen, rein elektrooptischen Zoom während des Kamerabetriebs.
Eine fixierbare (einmalige) Einstellung des Gesichtsfeldes unabhängig von den Parametern des Kamerachips selbst ist das Vorschalten einer festbrennweitigen Linse mit geeigneter Brennweite. Ob konkave oder konvexe Linsen gewählt werden, bestimmt die Orientierung des Bildes bzw. das Vorzeichen des Abbildungsmaßstabes. Die vorgeschalteten Linsen können zur Reduktion der Baulänge auch als Fresnellinsen ausgeführt sein. Weiterhin verursacht das Vorschalten eines Prismas die entsprechende Einstellung der Blickrichtung der gesamten Kamera. Auch das Prisma kann als Fresnelstruktur ausgeführt sein.

## Patentansprüche

1. Bilderfassungssystem aus als Array angeordneten optischen Kanälen mit einer Mikrolinse (14) und mindestens einem in dessen Brennebene liegenden Detektor (15), der aus dem Mikrobild hinter der Mikrolinse mindestens einen Bildpunkt extrahiert, sowie gegebenenfalls vor dem Detektor angeordneter Lochblende (12), wobei die optischen Achsen (13) der einzelnen optischen Kanäle unterschiedliche Neigungen derart aufweisen, dass sie eine Funktion des Abstandes des optischen Kanals vom Mittelpunkt der zum Bild gewandten Seite des Bilderfassungssystems darstellen, womit das Verhältnis der Größe des Gesichtsfeldes zur Bildfeldgröße gezielt bestimmbar ist, und wobei Detektoren (15) mit derart hoher Empfindlichkeit eingesetzt werden, dass diese einen großen Pitch bei kleiner aktiver Fläche aufweisen, wobei die unterschiedliche Neigung der optischen Achsen der einzelnen optischen Kanäle **dadurch** gewährleistet wird, dass sich der Mittenabstand, d.h. Pitch, der Mikrolinsen vom Mittenabstand der Detektoren unterscheidet,
**dadurch gekennzeichnet, dass** zumindest ein Teil der Mikrolinsen anamorphotische Mikrolinsen sind, die für jeden einzelnen optischen Kanal unterschiedlich sind und dass die Optik aus abgeformten Mikrolinsenarray und den voneinander optisch isolierten optischen Kanälen als monolithische Struktur direkt auf dem Detektorarray aufgesetzt ist.

2. Bilderfassungssystem nach Anspruch 1,
**dadurch gekennzeichnet, dass** jeder optische Kanal mindestens ein bestimmtes Raumwinkelsegment des Objektraumes als korrespondierenden Bildpunkt erfasst, so dass die Gesamtheit der übertragenen Bildpunkte auf dem Detektorarray eine Rekonstruktion des Objektes erlaubt.

3. Bilderfassungssystem nach einem der vorhergehenden Ansprüche,
**dadurch gekennzeichnet, dass** sich die einzelnen Mikrolinsen hinsichtlich der Dezentrierung gegenüber dem Detektor, der Brennweite, der konischen und/oder asphärischen Parameter unterscheiden und somit unterschiedliche Neigungen der optischen Achsen ermöglichen.

4. Bilderfassungssystem nach einem der vorhergehenden Ansprüche,
**dadurch gekennzeichnet, dass** in den einzelnen Mikrolinsen Mikroprismen integriert sind, die unterschiedliche Neigungen der optischen Achsen ermöglichen.

5. Bilderfassungssystem nach einem der vorhergehenden Ansprüche,
**dadurch gekennzeichnet, dass** für die unterschiedlichen Neigungen der optischen Achsen die optischen Kanäle frei von außeraxialen Aberrationen sind.

6. Bilderfassungssystem nach einem der vorhergehenden Ansprüche,
**dadurch gekennzeichnet, dass** die einzelnen optischen Kanäle unterschiedliche Pitch-Differenzen zwischen Mikrolinse und Detektor und/oder Pinhole zur Korrektur einer Verzeichnung aufweisen.

7. Bilderfassungssystem nach einem der vorhergehenden Ansprüche,
**dadurch gekennzeichnet, dass** das Bilderfassungssystem eine Baulänge von weniger als 1 mm aufweist.

8. Bilderfassungssystem nach einem der vorhergehenden Ansprüche,
**dadurch gekennzeichnet, dass** die Zahl der optischen Kanäle im Bereich von 10 x 10 bis 1000 x 1000 liegt.

9. Bilderfassungssystem nach einem der vorhergehenden Ansprüche,
**dadurch gekennzeichnet, dass** die Größe der optischen Kanäle im Bereich von 10µm x 10µm bis 1mm x 1mm liegt.

10. Bilderfassungssystem nach einem der vorhergehenden Ansprüche,
**dadurch gekennzeichnet, dass** die regelmäßige Anordnung der optischen Kanäle quadratisch oder hexagonal dicht gepackt oder rotationssymmetrisch sind.

11. Bilderfassungssystem nach einem der vorhergehenden Ansprüche,
**dadurch gekennzeichnet, dass** die Positionen der Mikrolinsen und der Detektoren lithographisch genau definiert sind.

12. Bilderfassungssystem nach dem vorhergehenden Ansprüche,
**dadurch gekennzeichnet, dass** die optische Isolierung durch lithographisch hergestellte Trennwände erfolgt.

13. Bilderfassungssystem nach einem der vorhergehenden Ansprüche,
**dadurch gekennzeichnet, dass** die Detektoren als ein CCD, ein CMOS-Photosensorarray und/oder ein aus einem Polymer bestehenden Photosensorarray vorliegen.

14. Bilderfassungssystem nach einem der vorhergehenden Ansprüche,
**dadurch gekennzeichnet, dass** die optischen Kanäle jeweils mehrere Detektoren unterschiedlicher Funktion aufweisen.

15. Bilderfassungssystem nach einem der vorhergehenden Ansprüche,
**dadurch gekennzeichnet, dass** hinter den Mikrolinsen und unmittelbar vor den Detektoren Lochblenden angeordnet und so positioniert sind, dass jeder Mikrolinse mindestens eine Lochblende zugeordnet ist.

16. Bilderfassungssystem nach dem vorhergehenden Anspruch,
**dadurch gekennzeichnet, dass** das Verhältnis der aktiven Fläche des Detektors zur aktiven Fläche der Mikrolinse zur Festlegung von Lichtstärke und Auflösungsvermögen durch die Lochblende einstellbar ist.

17. Bilderfassungssystem nach dem vorhergehenden Anspruch,
**dadurch gekennzeichnet, dass** die Lochblenden einen Durchmesser im Bereich von 1 bis 10 µm besitzen.

18. Bilderfassungssystem nach einem der beiden vorhergehenden Ansprüche,
**dadurch gekennzeichnet, dass** die Lochblende aus einer Metall- oder Polymerbeschichtung oder Kombinationen hiervon hergestellt ist.

19. Bilderfassungssystem nach einem der vorhergehenden Ansprüche,
**dadurch gekennzeichnet, dass** das Bilderfassungssystem zusätzlich eine zwischen Bild und Mikrolinsen vorgeschaltete Flüssigkeitslinse zur Einstellung des Gesichtsfeldes aufweist.

20. Bilderfassungssystem nach einem der vorhergehenden Ansprüche,
**dadurch gekennzeichnet, dass** auf oder zwischen den optischen Kanälen Lichtquellen angeordnet sind.

21. Bilderfassungssystem nach einem der vorhergehenden Ansprüche,
**dadurch gekennzeichnet, dass** jedem optischen Kanal ein Pixel zugeordnet ist.

22. Bilderfassungssystem nach einem der vorhergehenden Ansprüche,
**dadurch gekennzeichnet, dass** jedem optischen Kanal mehrere Pixel zugeordnet sind.

23. Bilderfassungssystem nach dem vorhergehenden Anspruch,
**dadurch gekennzeichnet, dass** mehrere Pixel mit verschiedenen Eigenschaften oder Gruppen von Pixeln gleicher Eigenschaften vorliegen.

24. Bilderfassungssystem nach einem der beiden vorhergehenden Ansprüche,
**dadurch gekennzeichnet, dass** vor mehreren gleichartigen Pixeln Farbfilter angeordnet sind.

25. Bilderfassungssystem nach einem der Ansprüche 22 bis 24,
**dadurch gekennzeichnet, dass** mehrere gleichartige Pixel mit höherem Abstand in einem optischen Kanal zur Erhöhung der Lichtstärke ohne Auflösungsverlust angeordnet sind.

26. Bilderfassungssystem nach einem der Ansprüche 22 bis 24,
**dadurch gekennzeichnet, dass** die mehrere Pixel pro optischem Kanal so angeordnet sind, dass sich die optischen Achsen von mindestens zwei optischen Kanälen in einem Objektpunkt schneiden, um eine stereoskopische 3D-Bildaufnahme und/oder eine Abstandsmessung zu ermöglichen.

27. Bilderfassungssystem nach einem der Ansprüche 22 bis 26,
**dadurch gekennzeichnet, dass** vor oder auf den Mikrolinsen dispersive Elemente für Farbaufnahmen angeordnet sind.

28. Bilderfassungssystem nach einem der Ansprüche 22 bis 27,
**dadurch gekennzeichnet, dass** vor gleichartigen Pixeln eines optischen Kanals unterschiedlich orientierte Gitter oder strukturierte Polarisationsfilter zur Einstellung der Polarisationsempfindlichkeit angeordnet sind.

29. Bilderfassungssystem nach einem der vorhergehenden Ansprüche,
**dadurch gekennzeichnet, dass** das Bilderfassungssystem mit mindestens einem Flüssigkristallelement kombiniert ist.

30. Verwendung des Bilderfassungssystems nach einem der Ansprüche 1 bis 29 als integraler Bestandteil in flachbauenden Kleingeräten wie z.B. Uhren, Notebooks, PDAs oder Organizer, Mobiltelefonen, Brillen oder Kleidungsstücken.

31. Verwendung des Bilderfassungssystems nach einem der Ansprüche 1 bis 29 zur Überwachung, Sicherheitstechnik sowie zur Kontrolle und Durchsetzung von Zugangs- oder Nutzungsberechtigungen.

32. Verwendung des Bilderfassungssystems nach einem der Ansprüche 1 bis 29 als Kamera in einer Chipkarte bzw. Kreditkarte

33. Verwendung des Bilderfassungssystems nach einem der Ansprüche 1 bis 29 in der Medizintechnik, z.B. in der Endoskopie.

34. Verwendung des Bilderfassungssystems nach einem der Ansprüche 1 bis 29 als Sensorsystem im Automobilbereich, z.B. für Überwachungsaufgaben im Fahrzeuginnenraum und -außenraum.

35. Verwendung des Bilderfassungssystems nach einem der Ansprüche 1 bis 29 in der Luftfahrtindustrie, z.B. zur integrierten und intelligenten Cockpit-Überwachung.

36. Verwendung des Bilderfassungssystems nach einem der Ansprüche 1 bis 29 zur Iriserkennung, Fingerprinterkennung, Objekterkennung und Bewegungsdetektion, insbesondere der 3D-Bewegungsverfolgung.

## Claims

1. Image recognition system optical channels arranged as an array having a microlens (14) and at least one detector (15) which is situated in the focal plane thereof and extracts at least one image spot from the microimage behind the microlens, and, optionally, a pinhole diaphragm (12) disposed in front of the detector, the optical axes (13) of the individual optical channels having different inclinations in such a manner that they represent a function of the distance of the optical channel from the centre of the side of the image recognition system which is orientated towards the image, by means of which the ratio of the size of the field of view to the image field size can be determined specifically, and detectors (15) are used with such high sensitivity that these have a large pitch with a small active surface area, wherein the different inclination of the optical axes for the individual optical channels is ensured by differing of the central spacing , i.e. pitch, of the microlenses from the the central spacing of the detectors,
**characterized in that** at least a part of the microlenses are anamorphic microlenses, which are different for each optical channel and that the optic of moulded microlense array and optical channels being optically isolated from each other are placed directly on the detector array as monolithic structure.

2. Image recognition system according to claim 1,
**characterised in that** each optical channel detects at least one specific solid angle segment of the object space as corresponding image spot so that the totality of the transmitted image spots on the detector array allows reconstruction of the object.

3. Image recognition system according to one of the preceding claims,
**characterised in that** the individual microlenses differ with respect to decentralisation relative to the detector, the focal distance, the conical and/or aspherical parameters and hence enable different inclinations of the optical axes.

4. Image recognition system according to one of the preceding claims,
**characterised in that** microprisms which enable different inclinations of the optical axes are integrated in the individual microlenses.

5. Image recognition system according to one of the preceding claims,
**characterised in that** the optical channels are free of off-axis aberrations for the different inclinations of the optical axes.

6. Image recognition system according to one of the preceding claims,
**characterised in that** the individual optical channels have different pitch differences between microlens and detector and/or pinhole for correction of distortion.

7. Image recognition system according to one of the preceding claims,
**characterised in that** the image recognition system has a constructional length of less than 1 mm.

8. Image recognition system according to one of the preceding claims,
**characterised in that** the number of optical channels is in the range of 10 x 10 to 1000 x 1000.

9. Image recognition system according to one of the preceding claims,
**characterised in that** the size of the optical channels is in the range of 10 µm x 10 µm to 1 mm x 1 mm.

10. Image recognition system according to one of the preceding claims,
**characterised in that** the regular arrangement of the optical channels are packed tightly in a square or a hexagon or are rotational-symmetrical.

11. Image recognition system according to one of the preceding claims,
**characterised in that** the positions of the microlenses and of the detectors are precisely defined lithographically.

12. Image recognition system according to the preceding claim,
**characterised in that** the optical isolation is effected by lithographically produced separating walls.

13. Image recognition system according to one of the preceding claims,
**characterised in that** the detectors are present as a CCD, a CMOS photosensor array and/or a photosensor array consisting of a polymer.

14. Image recognition system according to one of the preceding claims,
**characterised in that** the optical channels respectively have a plurality of detectors of different function.

15. Image recognition system according to one of the preceding claims,
**characterised in that** pinhole diaphragms are disposed behind the microlenses and directly in front of the detectors and are positioned such that at least one pinhole diaphragm is assigned to each microlens.

16. Image recognition system according to the preceding claim,
**characterised in that** the ratio of the active surface of the detector to the active surface area of the microlens is adjustable in order to fix light strength and resolution power through the pinhole diaphragm.

17. Image recognition system according to the preceding claim,
**characterised in that** the pinhole diaphragms have a diameter in the range of 1 to 10 µm.

18. Image recognition system according to one of the two preceding claims,
**characterised in that** the pinhole diaphragm is produced from a metal or polymer coating or combinations thereof.

19. Image recognition system according to one of the preceding claims,
**characterised in that** the image recognition system has in addition a liquid lens which is pre-connected between image and microlenses in order to adjust the field of view.

20. Image recognition system according to one of the preceding claims,
**characterised in that** light sources are disposed on or between the optical channels.

21. Image recognition system according to one of the preceding claims,
**characterised in that** a pixel is assigned to each optical channel.

22. Image recognition system according to one of the preceding claims,
**characterised in that** a plurality of pixels is assigned to each optical channel.

23. Image recognition system according to the preceding claim,
**characterised in that** a plurality of pixels with different properties or groups of pixels of the same properties are present.

24. Image recognition system according to one of the two preceding claims,
**characterised in that** colour filters are disposed in front of a plurality of similar pixels.

25. Image recognition system according to one of the claims 22 to 24,
**characterised in that** a plurality of similar pixels at a greater spacing is disposed in an optical channel in order to increase the light strength without loss of resolution.

26. Image recognition system according to one of the claims 22 to 24,
**characterised in that** the plurality of pixels per optical channel is disposed such that the optical axes of at least two optical channels intersect in one object spot in order to enable a stereoscopic 3D photograph and/or a distance measurement.

27. Image recognition system according to one of the claims 22 to 26,
**characterised in that** dispersive elements for colour photos are disposed in front of or on the microlenses.

28. Image recognition system according to one of the claims 22 to 27,
**characterised in that** differently orientated gratings or structured polarisation filters are disposed in front of similar pixels of an optical channel in order to adjust the polarisation sensitivity.

29. Image recognition system according to one of the preceding claims,
**characterised in that** the image recognition system is combined with at least one liquid crystal element.

30. Use of the image recognition system according to one of the claims 1 to 29 as integral component in flatly-constructed small appliances, such as e.g. clocks, notebooks, PDAs or organisers, mobile telephones, spectacles or clothing items.

31. Use of the image recognition system according to one of the claims 1 to 29 for monitoring, security technology and also for checking and implementing access or use authorisation.

32. Use of the image recognition system according to one of the claims 1 to 29 as a camera in a chip card or credit card.

33. Use of the image recognition system according to one of the claims 1 to 29 in medical technology, e.g. in endoscopy.

34. Use of the image recognition system according to one of the claims 1 to 29 as sensor system in the automobile field, e.g. for monitoring tasks in the interior and exterior of vehicles.

35. Use of the image recognition system according to one of the claims 1 to 29 in the aircraft industry, e.g. for integrated and intelligent cockpit monitoring.

36. Use of the image recognition system according to one of the claims 1 to 29 for iris recognition, fingerprint recognition, object recognition and movement detection, in particular 3D movement tracking.

## Revendications

1. Système d'acquisition d'image composé de canaux optiques disposés en réseau, avec une microlentille (14) et au moins un détecteur (15), situé dans le plan focal de celle-ci, qui extrait de la micro-image derrière la microlentille au moins un point d'image, ainsi qu'avec un diaphragme à trou (12) disposé éventuellement devant le détecteur, dans lequel les axes optiques (13) des canaux optiques individuels présentent des inclinaisons différentes de telle sorte qu'ils représentent une fonction de la distance du canal optique par rapport au centre du côté du système d'acquisition d'image tourné vers l'image, de sorte que le rapport entre la dimension du champ de vision et la dimension du champ d'image peut être déterminé précisément, et dans lequel des détecteurs (15) sont mis en oeuvre avec une sensibilité tellement élevée qu'ils présentent un pas élevé pour une petite surface active, dans lequel l'inclinaison variable des axes optiques des canaux optiques individuels est assurée en ce que la distance de centre à centre, c'est-à-dire le pas, des microlentilles est différente de la distance de centre à centre des détecteurs,
**caractérisé en ce qu'**au moins une partie des microlentilles sont des microlentilles anamorphosiques qui sont différentes pour chaque canal optique individuel, et **en ce que** le système optique composé d'un réseau de microlentilles moulées et de canaux optiques optiquement isolés les uns des autres est posé comme une structure monolithique directement sur le réseau de détecteurs.

2. Système d'acquisition d'image selon la revendication 1, **caractérisé en ce que** chaque canal optique acquiert au moins un segment angulaire solide déterminé de l'espace objet comme un point d'image correspondant de sorte que la totalité des points d'image transmis sur le réseau de détecteurs permet une reconstruction de l'objet.

3. Système d'acquisition d'image selon l'une quelconque des revendications précédentes, **caractérisé en ce que** les microlentilles individuelles se distinguent au niveau du décentrage par rapport au détecteur, de la distance focale, des paramètres coniques et/ou asphériques, et permettent ainsi différentes inclinaisons des axes optiques.

4. Système d'acquisition d'image selon l'une quelconque des revendications précédentes, **caractérisé en ce que** dans les microlentilles individuelles, des microprismes sont intégrés qui permettent différentes inclinaisons des axes optiques.

5. Système d'acquisition d'image selon l'une quelconque des revendications précédentes, **caractérisé en ce que** pour les différentes inclinaisons des axes optiques, les canaux optiques sont exempts d'aberrations extra-axiales.

6. Système d'acquisition d'image selon l'une quelconque des revendications précédentes, **caractérisé en ce que** les canaux optiques individuels présentent des différences de pas différentes entre la microlentille et le détecteur et/ou des trous sténopéiques pour corriger une distorsion d'image.

7. Système d'acquisition d'image selon l'une quelconque des revendications précédentes, **caractérisé en ce que** le système d'acquisition d'image présente une longueur de construction de moins de 1 mm.

8. Système d'acquisition d'image selon l'une quelconque des revendications précédentes, **caractérisé en ce que** le nombre des canaux optiques se situe dans la plage de 10 x 10 à 1000 x 1000.

9. Système d'acquisition d'image selon l'une quelconque des revendications précédentes, **caractérisé en ce que** la dimension des canaux optiques se situe dans la plage de 10 µm x 10 µm à 1 mm x 1 mm.

10. Système d'acquisition d'image selon l'une quelconque des revendications précédentes, **caractérisé en ce que** l'agencement régulier des canaux optiques est très compact de façon carrée ou hexagonale ou à symétrie de révolution.

11. Système d'acquisition d'image selon l'une quelconque des revendications précédentes, **caractérisé en ce que** les positions des microlentilles et des détecteurs sont définies exactement par lithographie.

12. Système d'acquisition d'image selon l'une quelconque des revendications précédentes, **caractérisé en ce que** l'isolation optique s'effectue par des cloisons réalisées par lithographie.

13. Système d'acquisition d'image selon l'une quelconque des revendications précédentes, **caractérisé en ce que** les détecteurs se présentent sous forme d'un CCD, d'un réseau de photocapteurs CMOS et/ou d'un réseau de photocapteurs composé d'un polymère.

14. Système d'acquisition d'image selon l'une quelconque des revendications précédentes, **caractérisé en ce que** les canaux optiques présentent respectivement plusieurs détecteurs de fonction différente.

15. Système d'acquisition d'image selon l'une quelconque des revendications précédentes, **caractérisé en ce que** derrière les microlentilles et directement devant les détecteurs, des diaphragmes à trou sont disposés et positionnés de telle sorte que chaque microlentille se voit attribuer au moins un diaphragme à trou.

16. Système d'acquisition d'image selon l'une quelconque des revendications précédentes, **caractérisé en ce que** le rapport entre la surface active du détecteur et la surface active de la microlentille pour définir l'intensité de lumière et le pouvoir de résolution est réglable par l'intermédiaire du diaphragme à trou.

17. Système d'acquisition d'image selon l'une quelconque des revendications précédentes, **caractérisé en ce que** les diaphragmes à trou possèdent un diamètre dans la plage de 1 à 10 µm.

18. Système d'acquisition d'image selon l'une des deux revendications précédentes, **caractérisé en ce que** le diaphragme à trou est réalisé à partir d'un revêtement de métal ou de polymère ou de combinaisons de ceux-ci.

19. Système d'acquisition d'image selon l'une quelconque des revendications précédentes, **caractérisé en ce que** le système d'acquisition d'image présente de plus une lentille liquide placée en amont entre l'image et les microlentilles pour le réglage du champ de vision.

20. Système d'acquisition d'image selon l'une quelconque des revendications précédentes, **caractérisé en ce que** des sources de lumière sont disposées sur ou entre les canaux optiques.

21. Système d'acquisition d'image selon l'une quelconque des revendications précédentes, **caractérisé en ce que** chaque canal optique se voit attribuer un pixel.

22. Système d'acquisition d'image selon l'une quelconque des revendications précédentes, **caractérisé en ce que** chaque canal optique se voit attribuer plusieurs pixels.

23. Système d'acquisition d'image selon l'une quelconque des revendications précédentes, **caractérisé en ce qu'**il existe plusieurs pixels ayant différentes propriétés ou groupes de pixels de propriétés identiques.

24. Système d'acquisition d'image selon l'une des deux revendications précédentes, **caractérisé en ce que** devant plusieurs pixels de même type, des filtres de couleur sont disposés.

25. Système d'acquisition d'image selon l'une quelconque des revendications 22 à 24, **caractérisé en ce que** plusieurs pixels de même type avec une plus grande distance sont disposés dans un canal optique pour augmenter l'intensité lumineuse sans perte de résolution.

26. Système d'acquisition d'image selon l'une quelconque des revendications 22 à 24, **caractérisé en ce que** les pixels multiples par canal optique sont disposés de telle sorte que les axes optiques d'au moins deux canaux optiques se coupent en un point objet afin de permettre une prise de vue 3D stéréoscopique et/ou une mesure de distance.

27. Système d'acquisition d'image selon l'une quelconque des revendications 22 à 26, **caractérisé en ce que** devant ou sur les microlentilles, des éléments dispersifs sont disposés pour des prises de vue en couleur.

28. Système d'acquisition d'image selon l'une quelconque des revendications 22 à 27, **caractérisé en ce que** devant des pixels de même type d'un canal optique, des réseaux d'orientation différente ou des filtres de polarisation structurés sont disposés pour le réglage de la sensibilité de polarisation.

29. Système d'acquisition d'image selon l'une quelconque des revendications précédentes, **caractérisé en ce que** le système d'acquisition d'image est combiné avec au moins un élément à cristaux liquides.

30. Utilisation du système d'acquisition d'image selon l'une quelconque des revendications 1 à 29 comme une partie intégrante dans des micro-appareils de construction plate, comme par exemple des horloges, des ordinateurs portables, des PDA ou organiseurs, des téléphones mobiles, des lunettes ou des vêtements.

31. Utilisation du système d'acquisition d'image selon l'une quelconque des revendications 1 à 29 pour la surveillance, la technique de sécurité ainsi que pour le contrôle et la mise en oeuvre d'autorisations d'accès ou d'exploitation.

32. Utilisation du système d'acquisition d'image selon l'une quelconque des revendications 1 à 29 comme un appareil photo sur une carte à puce, par exemple une carte de crédit.

33. Utilisation du système d'acquisition d'image selon l'une quelconque des revendications 1 à 29 dans la technique médicale, par exemple pour l'endoscopie.

34. Utilisation du système d'acquisition d'image selon l'une quelconque des revendications 1 à 29 comme un système de capteurs dans le domaine automobile, par exemple pour des tâches de surveillance à l'intérieur et à l'extérieur d'un véhicule.

35. Utilisation du système d'acquisition d'image selon l'une quelconque des revendications 1 à 29 dans l'industrie aéronautique, par exemple pour la surveillance intégrée et intelligente du poste de pilotage.

36. Utilisation du système d'acquisition d'image selon l'une quelconque des revendications 1 à 29 pour la reconnaissance d'un iris, la reconnaissance d'empreintes digitales, la reconnaissance d'objets et la détection de mouvement, en particulier le suivi de mouvement en 3D.
